# EUROPEAN PATENT APPLICATION

(11) **EP 4 564 656 A1**
(43) Date of publication of application: **04.06.2025**
(21) Application number: 23846999.3
(22) Date of filing: 26.07.2023
(51) Int. Cl.: H02K 41/035, H02K 3/46, G03B 5/00

(54) **CAMERA ACTUATOR AND CAMERA MODULE INCLUDING SAME**

(30) Priority: 29.07.2022 KR 20220094809; 24.07.2023 KR 20230096017
(71) Applicant: LG INNOTEK CO. LTD, Gangseo-gu Seoul 07796 (KR)
(72) Inventor: LEE, Jun Taek, Seoul 07796 (KR); KIM, Chan Joong, Seoul 07796 (KR); YOU, Jeong Gi, Seoul 07796 (KR)
(74) Representative: M. Zardi & Co S.A.
(86) International application number: PCT/KR2023/010846
(87) International publication number: WO 2024/025342

(57) **Abstract**

An embodiment discloses a camera actuator comprising: a housing including a first side portion; a first lens assembly moving in an optical axis direction in the housing; and a first driving unit moving the first lens assembly, wherein the first driving unit includes a first magnet arranged in the first lens assembly and a first coil facing the first magnet, the first coil is arranged on the first side portion of the housing and includes a first sub-coil and a second sub-coil sequentially arranged in the optical axis direction, and the housing includes a first reinforcing member arranged between the fist sub-coil and the second sub-coil.

## Description

### [Technical Field]

The present invention relates to a camera actuator and a camera module including the same.

### [Background Art]

A camera is a device for taking pictures or videos by capturing images of subjects and is mounted on mobile devices, drones, vehicles, or the like. To improve the quality of the image, a camera module may have an image stabilizer (IS) function for correcting or preventing the image shake caused by the movement of a user, an auto focusing (AF) function for aligning a focal length of a lens by automatically adjusting an interval between an image sensor and the lens, and a zooming function for capturing a remote subject by increasing or decreasing the magnification of the remote subject through a zoom lens.

However, there is a problem that the reliability of the housing deteriorates in response to a long movement distance of a lens assembly in the camera module.

### [Disclosure]

### [Technical Problem]

Embodiments of the present invention are directed to providing a camera actuator and a camera module, which have increased rigidity through a reinforcing member.

In addition, the embodiments of the present invention are directed to providing a camera actuator and a camera module, which provide an increased movement distance through a reinforcing member.

In addition, the embodiments of the present invention are directed to providing a camera actuator and a camera module, which provide different driving distances and increased driving efficiency through different lengths between sub-coils.

In addition, the embodiments of the present invention are directed to providing a camera actuator and a camera module, which adjust positions of a plurality of stoppers, thereby improving the balance of cracks and an impact of a lens in a lens assembly that moves in an optical axis direction.

The embodiments of the present invention are directed to providing a camera actuator applicable to ultra-slim, ultra-small, and high-resolution cameras.

The objects of embodiments are not limited thereto and may also include objects or effects that may be identified from the configurations or embodiments to be described below.

### [Technical Solution]

A camera actuator according to an embodiment of the present invention includes a housing including a first side portion, a first lens assembly moving in an optical axis direction in the housing, and a first driving part that moves the first lens assembly, wherein the first driving part includes a first magnet disposed on the first lens assembly and a first coil facing the first magnet, and the first coil includes a first sub-coil and a second sub-coil that are disposed on the first side portion of the housing and sequentially disposed in the optical axis direction, and the housing includes a first reinforcing member disposed between the first sub-coil and the second sub-coil.

At least a part of the first reinforcing member may overlap the first coil in the optical axis direction.

The first reinforcing member may include a first member groove disposed at an end portion.

The camera actuator may include a second lens assembly moving in the optical axis direction in the housing, and a second driving part moving the second lens assembly, wherein the housing may include a second side portion facing the first side portion, and the second driving part may include a second magnet disposed on the second lens assembly and a second coil facing the second magnet.

A length of the first magnet in the optical axis direction may be greater than a length of a hole of the first sub-coil in the optical axis direction.

A length of the first coil in the optical axis direction may be the sum of lengths of the first sub-coil and the second sub-coil in the optical axis direction and a length of the first reinforcing member in the optical axis direction.

The first groove may include a first sub-groove in which the first sub-coil is disposed and a second sub-groove in which the second sub-coil is disposed.

A length of the first magnet in the optical axis direction may be greater than a length of the first sub-groove or the second sub-groove in the optical axis direction.

The second coil may include a third sub-coil and a fourth sub-coil that are disposed on the second side portion of the housing and sequentially disposed in the optical axis direction.

A length of the second magnet in the optical axis direction may be greater than a length of the first coil in the optical axis direction.

The first coil and the second coil may be disposed to be misaligned with each other in a direction perpendicular to the optical axis direction.

A length of the first sub-coil or the second sub-coil in the optical axis direction may be smaller than a length of the third sub-coil or the fourth sub-coil in the optical axis direction.

The housing may include a second groove in which the second coil is disposed and a second reinforcing member disposed between the third sub-coil and the fourth sub-coil.

The first reinforcing member and the second reinforcing member may be disposed to be misaligned in a direction perpendicular to the optical axis direction.

A length of the second groove in the optical axis direction may be greater than a length of the first groove in the optical axis direction.

The second groove may include a third sub-groove in which the third sub-coil is disposed and a fourth sub-groove in which the fourth sub-coil is disposed.

A length of the third sub-groove or the fourth sub-groove in the optical axis direction may be greater than a length of the first sub-groove or the second sub-groove in the optical axis direction.

The first reinforcing member may be positioned in a central portion of the first groove, and the second reinforcing member may be positioned in a central portion of the second groove.

The camera actuator may include a 1-1 stopper and a 2-1 stopper disposed to be spaced apart from each other in the optical axis direction and adjacent to the first side portion, and a 1-2 stopper and a 2-2 stopper disposed to be spaced apart from each other in the optical axis direction and adjacent to the second side portion, wherein the 1-1 stopper and the 1-2 stopper may overlap each other in a direction perpendicular to the optical axis direction, and the 2-1 stopper and the 2-2 stopper may be disposed to be misaligned in the direction perpendicular to the optical axis direction.

A camera actuator according to an embodiment includes a housing including a first hole and a second hole that are formed in a first side portion and spaced apart from each other, a first lens assembly moving in an optical axis direction in the housing, and a first driving part that moves the first lens assembly, wherein the first driving part includes a first magnet disposed on the first lens assembly and a first coil facing the first magnet, and the first coil includes a first sub-coil and a second sub-coil that are disposed on the first side portion of the housing and sequentially disposed in the optical axis direction, and the first sub-coil is disposed in the first hole, and the second sub-coil is disposed in the second hole.

The housing may include a first portion disposed between the first hole and the second hole, and the first portion may overlap the first coil in the optical axis direction.

A camera actuator according to an embodiment includes a housing including a first side portion and a second side portion facing each other, a first lens assembly and a second lens assembly that move in an optical axis direction in the housing; a first driving part moving the first lens assembly, and a second driving part moving the second lens assembly, wherein the first driving part includes a first magnet disposed on the first lens assembly and a first sub-coil and a second sub-coil facing the first magnet and disposed on the first side portion, the second driving part includes a second magnet disposed on the second lens assembly and a third sub-coil and a fourth sub-coil facing the second magnet and disposed on the second side portion, and the housing includes a first reinforcing member disposed between the first sub-coil and the second sub-coil and a second reinforcing member disposed between the third sub-coil and the fourth sub-coil.

The first reinforcing member and the second reinforcing member may not overlap each other in a direction perpendicular to the optical axis direction.

### [Advantageous Effects]

According to the embodiments of the present invention, it is possible to implement the camera actuator and the camera module, which have increased rigidity through the reinforcing member.

In addition, according to the embodiments of the present invention, it is possible to implement the camera actuator and the camera module, which provide the increased movement distance through the reinforcing member.

In addition, according to the embodiments of the present invention, it is possible to implement the camera actuator and the camera module, which provide different driving distances and increased driving efficiency through different lengths between the sub-coils.

In addition, according to the embodiments of the present invention, it is possible to implement the camera actuator and the camera module, which adjust the positions of the plurality of stoppers, thereby improving the balance of cracks and an impact of the lens in the lens assembly that moves in the optical axis direction.

According to the embodiments of the present invention, it is possible to provide the camera actuator applicable to ultra-slim, ultra-small, and high-resolution cameras.

Various and beneficial advantages and effects of the present disclosure are not limited to the above-described contents and will be more readily understood in a process of describing specific embodiments of the present invention.

### [Description of Drawings]

FIG. 1 is a perspective view of a camera module according to an embodiment.
FIG. 2 is an exploded perspective view of the camera module according to the embodiment.
FIG. 3 is a view along line AA' in FIG. 1.
FIG. 4 is a perspective view of a second camera actuator according to an embodiment.
FIG. 5 is an exploded perspective view of the second camera actuator according to the embodiment.
FIG. 6 is a cross-sectional view along line DD' in FIG. 4.
FIGS. 7 and 8 are views for describing each driving of a lens assembly according to the embodiment.
FIG. 9 is a view for describing driving of the second camera actuator according to the embodiment.
FIG. 10 is a perspective view of some components of the second camera actuator according to the embodiment.
FIG. 11 is a view illustrating an optical driving coil, an optical driving magnet, and a yoke according to the embodiment.
FIG. 12 is a view for describing a movement of the optical driving magnet by a driving unit according to the embodiment.
FIG. 13 is a perspective view illustrating a housing, a coil, and a stopper of the second camera actuator according to the embodiment.
FIG. 14 is another perspective view illustrating the housing, the coil, and the stopper of the second camera actuator according to the embodiment.
FIG. 15 is a perspective view of the housing of the second camera actuator according to the embodiment.
FIG. 16 is a side view of the housing of the second camera actuator according to the embodiment.
FIG. 17 is another side view of the housing of the second camera actuator according to the embodiment.
FIG. 18 is a view along line EE' in FIG. 16.
FIG. 19 is a view along line FF' in FIG. 16.
FIG. 20 is a view along line HH' in FIG. 16.
FIG. 21 is a view along line II' in FIG. 16.
FIG. 22 is a view illustrating the coil and the stopper added to FIG. 16.
FIG. 23 is a view illustrating the coil and the stopper added to FIG. 17.
FIG. 24 is a top view of the coil and the stopper of the second camera actuator according to the embodiment.
FIG. 25 is a side view of the coil of the second camera actuator according to the embodiment.
FIG. 26 is another side view of the coil of the second camera actuator according to the embodiment.
FIG. 27 is a top view of the coil of the second camera actuator according to the embodiment.
FIG. 28 is a graph for describing an effect of the second camera actuator according to the embodiment.
FIG. 29 is a schematic diagram illustrating a circuit board according to an embodiment.
FIG. 30 is a perspective view of a mobile terminal to which the camera module according to the embodiment is applied.
FIG. 31 is a perspective view of a vehicle to which the camera module according to the embodiment is applied.

### [Mode for Invention]

Since the present invention may have various changes and various embodiments, specific embodiments are illustrated and described in the accompanying drawings. However, it should be understood that it is not intended to limit specific embodiments, and it should be understood to include all modifications, equivalents, and substitutes included in the spirit and scope of the present invention.

Terms including ordinal numbers such as second or first may be used to describe various components, but the components are not limited by the terms. The terms are used only for the purpose of distinguishing one component from another. For example, a second component may be referred to as a first component, and similarly, the first component may also be referred to as the second component without departing from the scope of the present invention. The term "and/or" includes a combination of a plurality of related listed items or any of the plurality of related listed items.

When a first component is described as being "connected" or "coupled" to a second component, it should be understood that the first component may be directly connected or coupled to the second component or a third component may be present therebetween. On the other hand, when a certain component is described as being "directly connected" or "directly coupled" to another component, it should be understood that others components are not present therebetween.

The terms used in the present application are only used to describe specific embodiments and are not intended to limit the present invention. The singular includes the plural unless the context clearly dictates otherwise. In the application, it should be understood that terms "include" and "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Unless defined otherwise, all terms used herein, including technical or scientific terms, have the same meaning as commonly understood by those skilled in the art to which the present invention pertains. Terms such as those defined in a commonly used dictionary should be construed as having a meaning consistent with the meaning in the context of the related art and should not be construed in an ideal or excessively formal meaning unless explicitly defined in the application.

Hereinafter, embodiments will be described in detail with reference to the accompanying drawings, and the same or corresponding components are denoted by the same reference numeral regardless of the reference numerals, and overlapping descriptions thereof will be omitted.

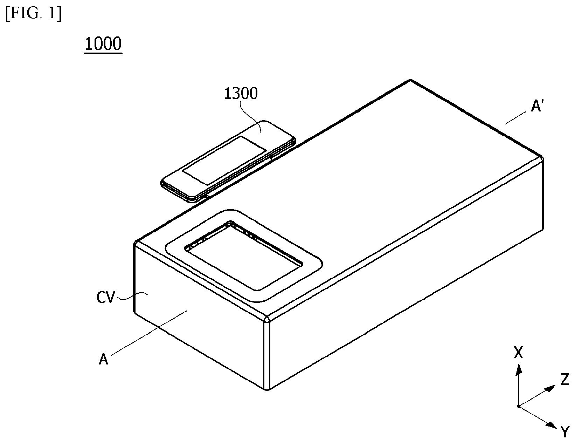

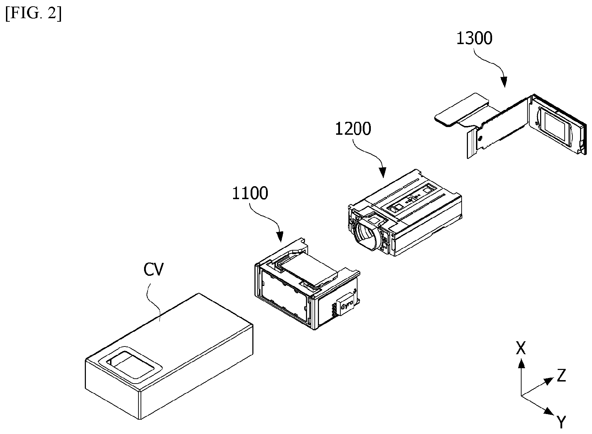

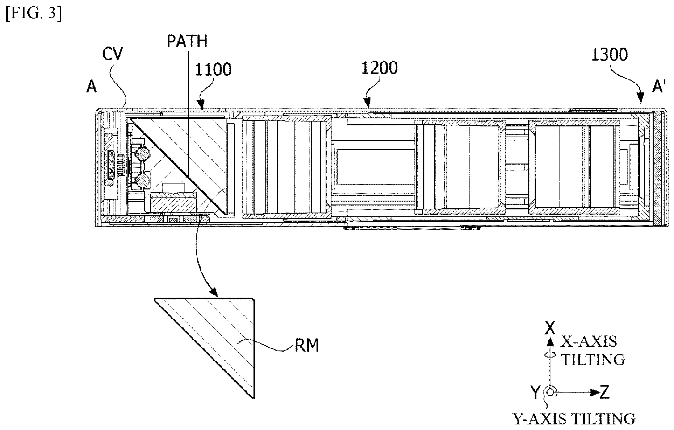

FIG. 1 is a perspective view of a camera module according to an embodiment, FIG. 2 is an exploded perspective view of the camera module according to the embodiment, and FIG. 3 is a view along line AA' in FIG. 1.

Referring to FIGS. 1 and 2, a camera module 1000 according to the embodiment may include a cover CV, a first camera actuator 1100, a second camera actuator 1200, and a circuit board 1300. Here, the first camera actuator 1100 may be used interchangeably with "first actuator," and the second camera actuator 1200 may be used interchangeably with "second actuator."

The cover CV may cover the first camera actuator 1100 and the second camera actuator 1200. It is possible to increase coupling strength between the first camera actuator 1100 and the second camera actuator 1200 by the cover CV.

Furthermore, the cover CV may be made of a material that blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator. For example, the first camera actuator 1100 may move an optical member in a direction perpendicular to the optical axis (axis of incident light).

The first camera actuator 1100 may include a fixed focal length lens disposed in a predetermined barrel (not illustrated). The fixed focal length lens may be referred to as "single focal length lens" or "single lens."

The first camera actuator 1100 may change an optical path. In an embodiment, the first camera actuator 1100 may vertically change the optical path through an internal optical member (e.g., a prism or a mirror). For example, the optical member may change light from a first direction (X-axis direction) to a third direction (Z-axis direction). Alternatively, the optical member may change the light from a first axis to a second axis. With this configuration, even when a thickness of a mobile terminal is decreased, a lens with a focal length that is greater than the thickness of the mobile terminal is disposed in the mobile terminal through a change in the optical path so that magnification and auto focusing (AF), zooming, and OIS functions may be performed.

However, the present invention is not limited thereto, and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. In addition, mutual coupling may be performed in any method.

In addition, the second camera actuator 1200 may be a zoom actuator or an AF actuator. For example, the second camera actuator 1200 may support one lens or a plurality of lenses and perform an AF function or a zooming function by moving the lenses according to a predetermined control signal of a control unit.

In addition, one lens or a plurality of lens may independently or separately move in the optical axis direction.

The circuit board 1300 may be disposed at a rear end of the second camera actuator 1200. The circuit board 1300 may be electrically connected to the second camera actuator 1200 and the first camera actuator 1100. In addition, a plurality of circuit boards 1300 may be provided.

A camera module according to the embodiment may be formed of one camera module or a plurality of camera modules. For example, the plurality of camera modules may include a first camera module and a second camera module.

In addition, the first camera module may include one actuator or a plurality of actuators. For example, the first camera module may include the first camera actuator 1100 and the second camera actuator 1200.

In addition, the second camera module may include an actuator (not shown) disposed in a predetermined housing (not shown) and capable of driving a lens part. The actuator may be a voice coil motor, a micro actuator, a silicon actuator, and the like and applied in any method such as an electrostatic method, a thermal method, a bimorph method, and an electrostatic force method, but the present invention is not limited thereto. In addition, in the present specification, the camera actuator may be referred to as "actuator" or the like. In addition, the camera module formed of the plurality of camera modules may be mounted in any electronic device such as a mobile terminal. Furthermore, the actuator may be a device for moving or tilting the lens or the optical member. However, hereinafter, the actuator will be described as including the lens or the optical member. Furthermore, the actuator may be referred to as "lens transfer device," "lens moving device," "optical member transfer device," "optical member moving device," etc.

Referring to FIG. 3, the camera module according to the embodiment may include the first camera actuator 1100 for performing the OIS function and the second camera actuator 1200 for performing the zooming function and the AF function.

Light may be incident on the camera module or the first camera actuator through an opening region positioned in an upper surface of the first camera actuator 1100. That is, the light may primarily enter the first camera actuator 1100 in a vertical direction (e.g., an X-axis direction, based on incident light), and the optical path may be changed in an optical axis direction (e.g., a Z-axis direction) through the optical member. In addition, the light may pass through the second camera actuator 1200 and may be incident on an image sensor IS positioned at one end of the second camera actuator 1200 (PATH). In the present specification, the Z-axis direction or a third direction will be described as the optical axis direction as follows. In addition, the first direction and the X-axis direction will be described as the vertical direction. In addition, a second direction and a Y-axis direction will be described as a horizontal direction.

In the present specification, a lower surface indicates one side in a first direction. In addition, the first direction is the X-axis direction in the drawings and may be used interchangeably with a second axis direction or the like. A second direction is a Y-axis direction in the drawings and may be used interchangeably with a first axis direction or the like. The second direction is a direction perpendicular to the first direction. In addition, the third direction is the Z-axis direction in the drawings and may be used interchangeably with a third axis direction or the like. In addition, the third direction is perpendicular to both the first direction and the second direction. Here, the third direction (Z-axis direction) corresponds to the optical axis direction, and the first direction (X-axis direction) and the second direction (Y-axis direction) are directions perpendicular to the optical axis. In addition, hereinafter, the optical axis direction is the third direction (Z-axis direction) in the description of the first and second camera actuators, and based on this, the following description will be given.

In addition, in the present specification, an inside may be a direction from the cover CV to the first camera actuator, and an outside may be a direction opposite to the inside. That is, the first camera actuator and the second camera actuator may be positioned inside the cover CV, and the cover CV may be positioned outside the first camera actuator or the second camera actuator.

In addition, with this configuration, the camera module according to the embodiment may resolve the spatial limitations of the first camera actuator and the second camera actuator by changing the optical path. That is, the camera module according to the embodiment may extend the optical path while minimizing the thickness of the camera module in response to the change in the optical path. Furthermore, it should be understood that the second camera actuator may provide a high range of magnification by controlling a focus or the like in the extended optical path.

In addition, the camera module according to the embodiment can implement OIS by controlling the optical path through the first camera actuator, thereby minimizing the occurrence of a decentering or tilting phenomenon and providing the best optical characteristics.

Furthermore, the second camera actuator 1200 may include an optical system and a lens driving part. For example, at least one of a first lens assembly, a second lens assembly, and a third lens assembly may be disposed in the second camera actuator 1200.

In addition, the second camera actuator 1200 may include a coil and a magnet and perform a high-magnification zooming function and the AF function.

For example, although the first lens assembly and the second lens assembly may be moving lenses that move through the coil, the magnet, and a guide pin and the third lens assembly may be a fixed lens, the present invention is not limited thereto. For example, the third lens assembly may perform a function of a focator by which light forms an image at a specific position, and the first lens assembly may perform a function of a variator for re-forming an image formed by the third lens assembly, which is the focator, at another position. Meanwhile, the first lens assembly may be in a state in which a magnification change is large because a distance to a subject or an image distance is greatly changed, and the first lens assembly, which is the variator, may play an important role in a focal length or magnification change of the optical system. Meanwhile, imaging points of an image formed by the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed by the first lens assembly which is the variator. For example, the first lens assembly and the second lens assembly may be driven by an electromagnetic force generated by the interaction between the coil and the magnet. The above description may be applied to a lens assembly to be described below. In addition, the first lens assembly to the third lens assembly may move in the optical axis direction, that is, in the third direction. In addition, the first lens assembly to the third lens assembly may move in the third direction independently or dependently. In the present invention, the first lens assembly and the second lens assembly may move in the optical axis direction. In addition, the third lens assembly may be positioned at a front end of the first lens assembly or at a rear end of the second lens assembly. In addition, the third lens assembly may not move in the optical axis direction. That is, the third lens assembly may be a fixed part. In addition, the first and second lens assemblies may be moving parts.

Meanwhile, when the OIS actuator and the AF/zoom actuator are disposed according to the embodiment of the present invention, the magnetic field interference with AF/zoom magnets can be prevented when OIS is driven. Since a first driving magnet of the first camera actuator 1100 is disposed separately from the second camera actuator 1200, it is possible to prevent the magnetic field interference between the first camera actuator 1100 and the second camera actuator 1200. In the present specification, OIS may be used interchangeably with terms such as hand shaking correction, optical image stabilization, optical image correction, or shaking correction.

In particular, an optical member RM in the first camera actuator 1100 may tilt along an X-axis or a Y-axis. Accordingly, the optical path can be easily changed according to the X-axis tilting or the Y-axis tilting.

The optical member RM may be seated on a holder of the first camera actuator or the like. In an embodiment, the optical member RM may be formed of a mirror or a prism. Hereinafter, the optical member RM is illustrated as being the prism, but may be formed of a plurality of lenses as in the above-described embodiment. Alternatively, the optical member RM may be formed of the plurality of lenses and the prism or the mirror. In addition, the optical member RM may include a reflector disposed therein. However, the present invention is not limited thereto.

The optical member RM in the first camera actuator 1100 may tilt along an X-axis or a Y-axis by the driving of a VCM or the like. That is, OIS may be implemented by tilting or rotating the optical member RM in the Y-axis direction or the X-axis direction.

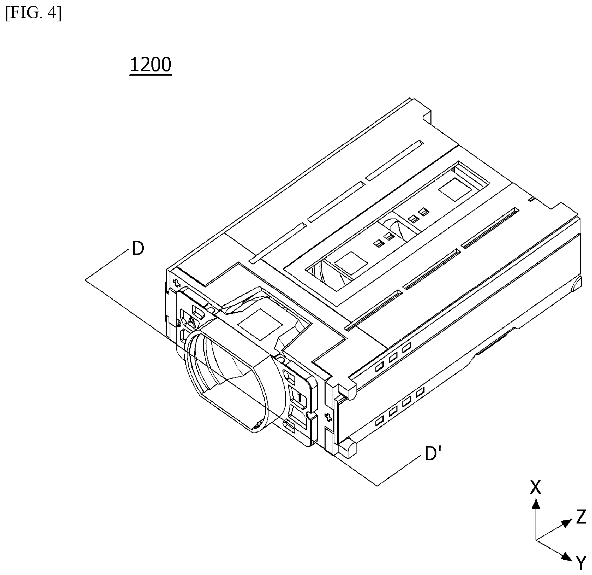

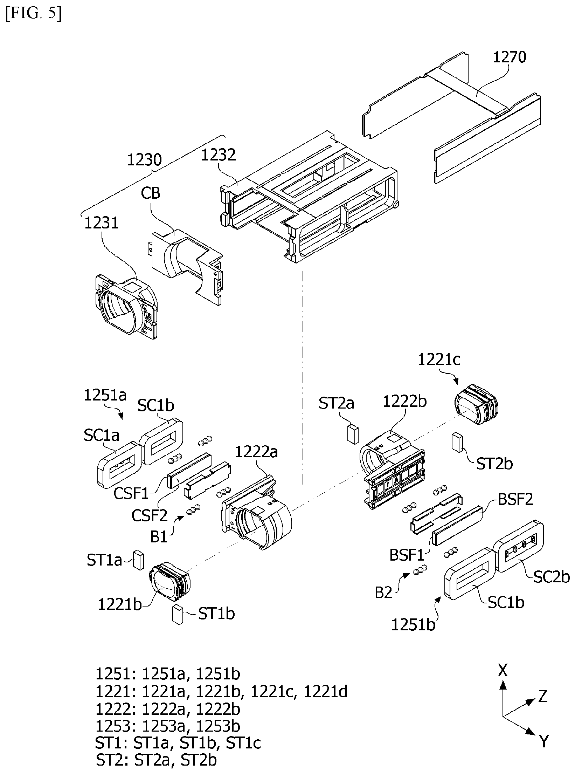

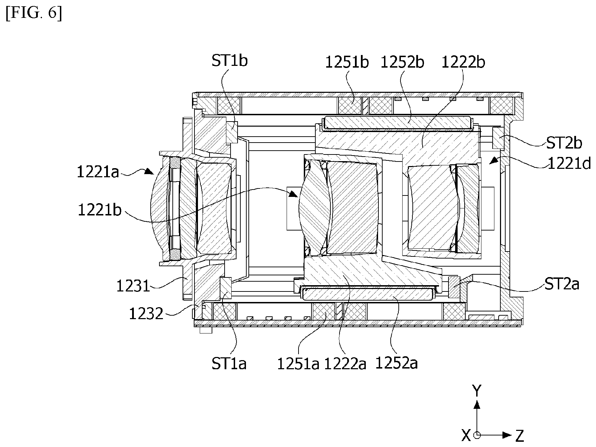

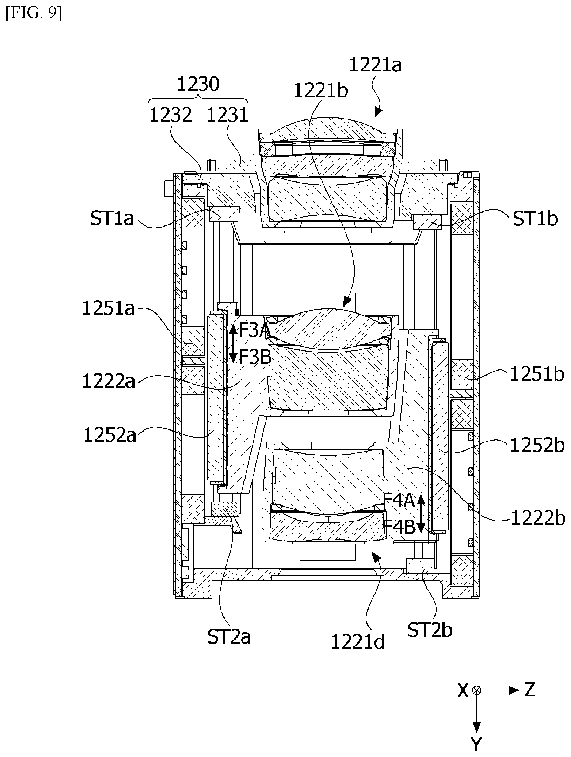

FIG. 4 is a perspective view illustrating a second camera actuator according to the embodiment, FIG. 5 is an exploded perspective view illustrating the second camera actuator according to the embodiment, FIG. 6 is a cross-sectional view of the second camera actuator along line DD' in FIG. 4, FIGS. 7 and 8 are views for describing each driving operation of a lens assembly according to the embodiment, and FIG. 9 is a view for describing driving of the second camera actuator according to the embodiment.

Referring to FIGS. 4 to 6, the second camera actuator 1200 (or a camera device, a zoom lens transport device, a zoom lens moving device, or a lens transport device) according to the embodiment may include a lens part 1220, a housing 1230, a driving part 1250, a base part 1260, a board part 1270, and stoppers ST1 and ST2. Furthermore, the second camera actuator 1200 may further include a shield can (not illustrated), an elastic part (not illustrated), and a bonding member (not illustrated).

In addition, as will be described below, a lens group may move in the optical axis direction. In addition, the lens group may be coupled with a lens assembly to move together in the optical axis direction. In this case, the second camera actuator may include a moving part that moves in the optical axis direction like the lens group, and a fixed part relatively fixed without moving in the optical axis direction unlike the moving part. In the present embodiment, the moving part may include lens assemblies (e.g., first and second lens assemblies), optical driving magnets (first and second driving magnets). In addition, the fixed part may include a housing, a board part, optical driving coils (first and second coils), and a hall sensor. Furthermore, a driving magnet may be disposed on one of the moving part and the fixed part, and a driving coil may be disposed on the other. A movement distance of the lens assembly to be described below corresponding to such description may correspond to a movement distance of the moving part.

The shield can (not illustrated) may be positioned in one region (e.g., an outermost side) of the second camera actuator 1200 to surround components (the lens part 1220, the housing 1230, the driving part 1250, the base part 1260, the board part 1270, and the image sensor IS disposed on a circuit board at a rear end) to be described below.

The shield can (not illustrated) can block or reduce electromagnetic waves generated from the outside. Accordingly, it is possible to reduce the occurrence of a malfunction of the driving part 1250.

The lens part 1220 may be positioned in the shield can (not illustrated). The lens part 1220 may move in the third direction (the Z-axis direction or the optical axis direction). Therefore, the above-described AF function or zooming function may be performed.

In addition, the lens part 1220 may be positioned in the housing 1230. Accordingly, at least a part of the lens part 1220 may move in the optical axis direction or the third direction (the Z-axis direction) in the housing 1230.

Specifically, the lens part 1220 may include a lens group 1221 and a moving assembly 1222.

First, the lens group 1221 may include at least one lens. In addition, although the lens group 1221 may be provided as a plurality of lens groups, the following description will be given based on one lens group.

The lens group 1221 may be coupled to the moving assembly 1222 and moved in the third direction (the Z-axis direction) by an electromagnetic force generated from a first magnet 1252a and a second magnet 1252b that are coupled to the moving assembly 1222.

**In** an embodiment, the lens group 1221 may include a first lens group 1221a, a second lens group 1221b, and a third lens group 1221c. The first lens group 1221a, the second lens group 1221b, and the third lens group 1221c may be sequentially disposed in the optical axis direction. Furthermore, the lens group 1221 may further include a fourth lens group. The fourth lens group may be disposed at a rear end of the third lens group 1221c.

The first lens group 1221a may be fixedly coupled to a first housing (or a fixed assembly). That is, the first lens group 1221a may not move in the optical axis direction.

The second lens group 1221b may be coupled to a first lens assembly 1222a to move in the third direction or the optical axis direction. Magnification adjustment may be performed by moving the first lens assembly 1222a and the second lens group 1221b.

The third lens group 1221c may be coupled to the second lens assembly 1222b to move in the third direction or the optical axis direction. Focus adjustment or auto focusing may be performed by moving the third lens group 1221.

However, the present invention is not limited to the number of lens groups, and the above-described fourth lens group is not present, or an additional lens group or the like other than the fourth lens group 1121d may be further disposed.

The moving assembly 1222 may include an opening region surrounding the lens group 1221. The moving assembly 1222 is used interchangeably with the first and second lens assemblies. The moving assembly 1222 or the lens assembly may move in the optical axis direction (the Z-axis direction) in the housing 1230. In addition, the moving assembly 1222 may be coupled to the lens group 1221 by any method. In addition, the moving assembly 1222 may include a groove in a side surface thereof and may be coupled to the first magnet 1252a and the second magnet 1252b through the groove. A coupling member or the like may be applied to the groove.

In addition, the moving assembly 1222 may be coupled to the elastic parts (not illustrated) at an upper end and a rear end thereof. Therefore, the moving assembly 1222 may be supported by the elastic parts (not illustrated) while moving in the third direction (the Z-axis direction). That is, the position of the moving assembly 1222 may be maintained in the third direction (the Z-axis direction). The elastic part (not illustrated) may be formed of any elastic element such as a leaf spring.

The moving assembly 1222 may be positioned in the housing 1230 and may include the first lens assembly 1222a and a second lens assembly 1222b.

A region of the second lens assembly 1222b in which the third lens group is seated may be positioned at a rear end of the first lens assembly 1222a. That is, the region of the second lens assembly 1222b in which the third lens group 1221c is seated may be positioned between a region of the first lens assembly 1222a in which the second lens group 1221b is seated and the image sensor.

The first lens assembly 1222a and the second lens assembly 1222b may face a first guide part G1 and a second guide part G2, respectively. The first guide part G1 and the second guide part G2 may be positioned on a first side portion 1232a and a second side portion 1232b of the housing 1230 (or the second housing) to be described below. The first guide part and the second guide part may be disposed integrally or separately on the first side portion 1232a and the second side portion 1232b of the housing 1230 (or the second housing) to be described below. The following description will be given based on an integrated type.

In addition, optical driving magnets may be seated on outer surfaces of the first lens assembly 1222a and the second lens assembly 1222b. For example, the second magnet 1252b may be seated on the outer surface of the second lens assembly 1222b. The first magnet 1252a may be seated on the outer surface of the first lens assembly 1222a. In the present specification, the first lens assembly 1222a may be used interchangeably with a "first bobbin." The second lens assembly 1222b may be used interchangeably with a "second bobbin."

The housing 1230 may be disposed between the lens part 1220 and the shield can (not illustrated). In addition, the housing 1230 may be disposed to surround the lens part 1220.

The housing 1230 may include a first housing 1231, a second housing 1232, and a cover base CB. The first housing 1231 may be coupled to the first lens group 1221a and may also be coupled to the above-described first camera actuator. The first housing 1231 may be positioned in front of the second housing 1232. The first housing may be referred to as a "fixed assembly," a "fixed lens assembly," a "fixed lens accommodation part," or the like. The second housing may be referred to as a "main barrel," a "lens barrel," a "barrel," or the like.

In addition, the second housing 1232 may be positioned behind the first housing 1231. The first and second lens assemblies and the lens part 1220 may be seated inside the second housing 1232.

A hole may be formed in a side portion of the housing 1230 (or the second housing 1232). A first coil 1251a and a second coil 1251b may be disposed in the hole. The hole may be positioned to correspond to the above-described groove of the moving assembly 1222. In this case, the first coil 1251a and the second coil 1251b may each be formed as a plurality of coils.

In an embodiment, the housing 1230 (in particular, the second housing 1232) may include the first side portion 1232a and the second side portion 1232b. The first side portion 1232a and the second side portion 1232b may be positioned to correspond to each other. For example, the first side portion 1232a and the second side portion 1232b may be symmetrically disposed with respect to the third direction. An optical driving coil 1251 may be positioned on the first side portion 1232a and the second side portion 1232b. In addition, the board part 1270 may be seated on outer surfaces of the first side portion 1232a and the second side portion 1232b. That is, a first board may be positioned on the outer surface of the first side portion 1232a, and a second board may be positioned on the outer surface of the second side portion 1232b.

The cover base CB may be disposed between the first housing 1231 and the second housing 1232. The cover base CB can prevent the lens (e.g., the first lens group) positioned or accommodated in the first housing 1231 (or the fixed assembly) from being damaged by an impact. That is, the cover base CB may absorb the impact of the moving assembly when the moving assembly moves in the second housing 1232. Furthermore, a 1-1 stopper ST1a and a 1-2 stopper St1b, which will be described below, may be positioned on a rear surface or lower surface of the cover base CB. For example, the 1-1 stopper ST1a and the 1-2 stopper ST1b may be positioned between the cover base CB and the moving assembly (e.g., the first lens assembly). Accordingly, the moving assembly may be primarily in contact with the 1-1 stopper ST1a and the 1-2 stopper ST1b. Accordingly, the reliability of the lens group can be improved.

Furthermore, the cover base CB may be bonded to the first housing 1231 and the second housing 1232 by a bonding member (e.g., an epoxy). Accordingly, by adjusting the shape of the cover base CB, the first housing 1231 and the second housing 1232 may be easily bonded. In addition, by adding the cover base CB, the ease of manufacturing at least one of the first housing 1231 and the second housing 1232 can be secured.

Furthermore, the first guide part and the second guide part may be positioned on the first side portion 1232a and the second side portion 1232b of the housing 1230 (or the second housing 1232).

The first guide portion and the second guide portion may be positioned correspondingly. For example, the first guide part and the second guide part may be positioned to face each other with respect to the third direction (the Z-axis direction). In addition, at least parts of the first guide part and the second guide part may overlap each other in the second direction (the Y-axis direction).

The first guide part and the second guide part may include at least one groove (e.g., a guide groove) or recess. In addition, a first ball B1 or a second ball B2 may be seated in the groove or the recess. The second camera actuator 1200 may further include a ball part. The ball part may include the first ball B1 and the second ball B2. The first and second lens assemblies may be moved in the optical axis direction by the ball part. In this case, the ball part may include at least one rolling member or ball. In addition, at least one ball may move along guide grooves of the first and second guide parts. In addition, at least one ball may move along the recesses or grooves of the first and second lens assemblies. Accordingly, the first ball B1 or the second ball B2 may move in the third direction (the Z-axis direction) in the guide groove of the first guide part or the guide groove of the second guide part.

Alternatively, the first ball B1 or the second ball B2 may move in the third direction along a rail formed inside the first side portion 1232a of the housing 1230 or a rail formed inside the second side portion 1232b of the housing 1230.

Accordingly, the first lens assembly 1222a and the second lens assembly 1222b may move in the third direction or the optical axis direction. In this case, the second lens assembly 1222b may be disposed adjacent to or closer to the image sensor than the first lens assembly 1222a.

According to the embodiment, the first ball B1 may be in contact with the first lens assembly 1222a. The second ball B2 may be in contact with the second lens assembly 1222b. Accordingly, at least a part of the first ball B1 may overlap the second ball B2 in the first direction (the X-axis direction) depending on a position.

In addition, the first guide part and the second guide part may include a first guide groove facing a first recess RS1. In addition, the first guide part and the second guide part may include a second guide groove facing a second recess RS2. The first guide groove and the second guide groove may be grooves extending in the third direction (the Z-axis direction). In addition, the first guide groove and the second guide groove may be grooves having different shapes. For example, the first guide groove may be a groove with an inclined side surface, and the second guide groove may be a groove with a side surface perpendicular to a bottom surface thereof.

In addition, the first guide groove or the second guide groove may be formed as a plurality of guide grooves. In addition, a plurality of balls of which some have different diameters may be positioned in the plurality of guide grooves.

The second magnet 1252b may be positioned to face the second coil 1251b. In addition, the first magnet 1252a may be positioned to face the first coil 1251a.

For example, at least one of the first coil 1251a and the second coil 1251b may be formed as at least one coil. For example, the first coil 1251a may be formed as a plurality of coils. The second coil 1251b may be formed as a plurality of coils. In addition, even when the first coil and the second coil are each formed as one coil, a long stroke to be described below may be implemented.

In an embodiment, the optical driving coil 1251 may be formed of sub-coils sequentially disposed in the optical axis direction (the Z-axis direction). For example, a plurality of sub-coils may be sequentially disposed at each of both sides of the main barrel 1232 in the optical axis direction. The second housing may be used interchangeably with the "main barrel."

In the present embodiment, the optical driving part (or the driving part 1250) may include a first driving part and a second driving part. The first driving part may provide a driving force for moving the first lens assembly 1222a in the optical axis direction. The first driving part may include the first coil 1251a and the first magnet 1252a. In addition, the first driving part may include the first driving coil and the first driving magnet. Accordingly, the first coil 1251a may be referred to as the "first driving coil." In addition, the first magnet 1252a may be referred to as the "first driving magnet."

In addition, the second driving part may provide a driving force for moving the second lens assembly 1222b in the optical axis direction. The second driving part may include the second coil 1251b and the second magnet 1252b.

In addition, the second driving part may include the second driving coil and the second driving magnet. Accordingly, the second coil 1251b may be referred to as the "second driving coil." In addition, the second magnet 1252b may be referred to as the "second driving magnet."

The elastic part (not illustrated) may include a first elastic member (not illustrated) and a second elastic member (not illustrated). The first elastic member (not illustrated) may be coupled to an upper surface of the moving assembly 1222. The second elastic member (not illustrated) may be coupled to a lower surface of the moving assembly 1222. In addition, the first elastic member (not illustrated) and the second elastic member (not illustrated) may be formed of a leaf spring as described above. In addition, the first elastic member (not illustrated) and the second elastic member (not illustrated) may provide elasticity for moving the moving assembly 1222. However, the present invention is not limited to the above-described position, and the elastic part may be disposed at any position.

In addition, the driving part 1250 may provide a driving force for moving the lens part 1220 in the third direction (the Z-axis direction). The driving unit 1250 may include the optical driving coil 1251 and the optical driving magnet 1252. The optical driving coil 1251 and the optical driving magnet 1252 may be positioned to face each other. For example, the first driving coil 1251a and the first driving magnet 1252a may be positioned to face each other. In addition, the second driving coil 1251b and the second driving magnet 1252b may be positioned to face each other. The first driving coil 1251a may be positioned at one side in the second direction in the housing, and the second driving coil 1251a may be positioned at the other side in the second direction in the housing.

Furthermore, the driving part 1250 may further include a Hall sensor part. The Hall sensor part 1253 may include at least one first Hall sensor 1253a and at least one second Hall sensor 1253b and may be positioned inside or outside the optical driving coil 1251.

The moving assembly may move in the third direction (the Z-axis direction) by an electromagnetic force generated between the optical driving coil 1251 and the optical driving magnet 1252.

The optical driving coil 1251 may include the first coil 1251a and the second coil 1251b. In addition, as described above, the first coil 1251a and the second coil 1251b may each be formed of a plurality of sub-coils. In addition, the first coil 1251a and the second coil 1251b may be disposed in the holes formed in the side portions of the housing 1230. In addition, the first coil 1251a and the second coil 1251b may be electrically connected to the board part 1270. Accordingly, the first coil 1251a and the second coil 1251b may receive a current or the like through the board part 1270.

In addition, the optical driving coil 1251 may be coupled to the board part 1270 through a yoke or the like.

In addition, in an embodiment, the optical driving coil 1251 is a fixed element along with the board part 1270. In contrast, the optical driving magnet 1252 is a moving element that moves in the optical axis direction (the Z-axis direction) along with the first and second assemblies.

The optical driving magnet 1252 may include the first magnet 1252a and the second magnet 1252b.

In an embodiment, the first coil 1251a may include a first sub-coil SC1a and a second sub-coil SC2a. The first sub-coil SC1a and the second sub-coil SC2a may be sequentially disposed in the optical axis direction. The first sub-coil SC1a may be closer to the first camera actuator than the second sub-coil SC2a.

In addition, the second coil 1251b may include a third sub-coil SC1b and a fourth sub-coil SC2b. The third sub-coil SC1b and the fourth sub-coil SC2b may be sequentially disposed in the optical axis direction. The third sub-coil SC1b may be closer to the first camera actuator than the fourth sub-coil SC2b.

In addition, the first magnet 1252a may face the first sub-coil SC1a and the second sub-coil SC2a. The second magnet 1252b may face the third sub-coil SC1b and the fourth sub-coil SC2b. The first sub-coil SC1a may be positioned to overlap the third sub-coil SC1b in the second direction. The second sub-coil SC2a may be positioned to overlap the fourth sub-coil SC2b in the second direction. In this way, the first magnet 1252a and the second magnet 1252b may be positioned to face two sub-coils in the same manner.

Furthermore, the coils of the first and second driving parts in the second camera actuator may be described as including first sub-coils SC1a and SC1b and second sub-coils SC2a and SC2b. However, in the specification, the sub-coils driving the second lens assembly are described by being used interchangeably with the third sub-coil and the fourth sub-coil.

The first sub-coil SC1a and the second sub-coil SC2a may be disposed to be spaced apart from each other in the optical axis direction. The first sub-coil SC1a and the second sub-coil SC2a may be connected parallel to each other. For example, one of one end and the other end of the first sub-coil SC1a may be connected to one of one end and the other end of the second sub-coil SC2a at a single node. In addition, the other end of the one end and the other end of the first sub-coil SC1a may be connected to the other end of the one end and the other end of the second sub-coil SC2a at a different node. That is, a current applied to the first sub-coil SC1a and the second sub-coil SC2a may be distributed to each sub-coil. Accordingly, the first sub-coil SC1a and the second sub-coil SC2a may be electrically connected in parallel, thereby reducing heat generation.

In addition, a polarity of one surface of the first driving magnet 1252a, which faces the first driving coils SC1a and SC2a, may be the same as a polarity of one surface of the second driving magnet 1252b, which faces the second driving coils SC1b and SC2b. For example, an inner surface of the first driving magnet 1252a and an inner surface of the second driving magnet 1252b may have one (e.g., an N pole) of an N pole and an S pole. An outer surface of the first driving magnet 1252a and an outer surface of the second driving magnet 1252b may have the other (e.g., an S pole) of the N pole and the S pole. Here, the inner surface may be a side surface adjacent to the optical axis, and the outer surface may be a side surface away from the optical axis with respect to the optical axis. In addition, the first magnet 1252a may have a first pole on a first surface BSF1 facing the optical driving coil (e.g., the first coil). In addition, the first magnet 1252a may have a second pole on a second surface BSF2 that is a surface opposite to the first surface BSF1. The second magnet 1252b may have the first pole on the first surface BSF1 facing the optical driving coil (e.g., the second coil). In addition, the second magnet 1252b may have the second pole on the second surface BSF2 that is a surface opposite to the first surface BSF1. The first pole may be one of the N pole and the S pole. In addition, the second pole may be the other of the N pole and the S pole.

Alternatively, the first driving magnet and the second driving magnet may have a structure in which the N pole/S pole or the S pole/N pole are sequentially disposed in the optical axis direction.

In addition, the third sub-coil SC1b and the fourth sub-coil SC2b may be disposed to be spaced apart from each other in the optical axis direction. The third sub-coil SC1b and the fourth sub-coil SC2b may be connected parallel to each other. For example, one of one end and the other end of the third sub-coil SC1b may be connected to one of one end and the other end of the fourth sub-coil SC2b at a single node.

The first magnet 1252a and the second magnet 1252b may be disposed in the above-described groove of the moving assembly 1222 and positioned to correspond to the first coil 1251a and the second coil 1251b. In addition, the optical driving magnet 1252 may be coupled to the first and second lens assemblies (or the moving assembly) along with the yoke to be described below.

A yoke part 1240 may be disposed on the board part 1270. The yoke part 1240 may generate an attractive force with an adjacent magnet to maintain the attitudes of the first and second lens assemblies. That is, the yoke part 1240 may provide a holding force for the moving assembly. The yoke part 1240 may include a first yoke 1241 and a second yoke 1242. The first yoke 1241 may be disposed on a first board 1271. The second yoke 1242 may be disposed on a second board 1272.

The base part 1260 may be positioned between the lens part 1220 and the image sensor in the circuit board. A component such as a filter may be fixed to the base part 1260. In addition, the base part 1260 may be disposed to surround the above-described image sensor. With this configuration, since the image sensor is free from foreign substances and the like, it is possible to improve the reliability of the device. However, the following description will be given without this in some drawings.

In addition, the second camera actuator 1200 may be a zoom actuator or an AF actuator. For example, the second camera actuator 1200 may support one lens or a plurality of lenses and perform an AF function or a zooming function by moving the lenses according to a predetermined control signal of a control unit.

In addition, the second camera actuator may be a fixed zoom or a continuous zoom. For example, the second camera actuator may provide the movement of the lens group 1221.

In addition, the second camera actuator may be formed of a plurality of lens assemblies. For example, in addition to the first lens assembly 1222a and the second lens assembly 1222b, at least one of a third lens assembly (not illustrated) and the guide pin (not illustrated) may be disposed in the second camera actuator. The above-described contents may be applied to the same. Accordingly, the second camera actuator may perform a high-magnification zooming function through the driving unit.

The image sensor may be positioned inside or outside the second camera actuator. In an embodiment, as illustrated, the image sensor may be positioned outside the second camera actuator. For example, the image sensor may be positioned on a circuit board. The image sensor may receive light and convert the received light into an electrical signal. In addition, the image sensor may include a plurality of pixels in the form of an array. In addition, the image sensor may be positioned on the optical axis.

The board part 1270 may be in contact with a side portion of the housing. For example, the board part 1270 may be positioned on an outer surface (a first side surface) of the first side portion and an outer surface (a second side surface) of the second side portion of the housing, in particular, the second housing and may be in contact with the first side surface and the second side surface.

The second camera actuator may further include the first stoppers ST1a and ST1b disposed at one end (or the front end) in the housing (or the second housing 1232) and the second stoppers ST2a and ST2b disposed at the other end (or the rear end).

A first stopper ST1 may be positioned at one end of the housing. For example, the first stopper ST1 may be positioned on an end portion of the second housing or the main barrel 1232 in a direction opposite to the optical axis direction. In an embodiment, the first stopper ST1 may be positioned on an inner side wall or an inner wall of the housing or the main barrel 1232. The first stopper ST1 may be positioned on a first inner wall among the first inner wall and a second inner wall of the main barrel 1232, which face each other in the optical axis direction. In addition, the first stopper ST1 may include the 1-1 stopper ST1a disposed at one side thereof and the 1-2 stopper ST1b disposed at the other side. For example, the 1-1 stopper ST1a may be disposed at one side of the first inner wall. In addition, the 1-2 stopper ST1b may be disposed at the other side of the first inner wall. The 1-1 stopper ST1a may be positioned adjacent to the first side portion. The 1-2 stopper ST1b may be positioned adjacent to the second side portion. One side and the other side may be one side and a side opposite to the one side in the second direction.

Alternatively, the 1-1 stopper ST1a may overlap a guiding part of the first lens assembly in the optical axis direction. The 1-2 stopper ST1b may overlap a lens protruding portion of the first lens assembly in the optical axis direction.

In addition, the first stopper ST1 may further include a 1-3 stopper disposed at the other side of the main barrel 1232. The 1-3 stopper may be positioned to overlap the guiding part of the second lens assembly 1222b in the optical axis direction.

For example, the first stopper ST2 may be disposed at the other end of the second housing or the main barrel 1232. For example, the second stopper ST2 may be positioned on an end portion of the second housing or the main barrel 1232 in the optical axis direction. In an embodiment, the second stopper ST2 may be positioned on the inner side wall or the inner wall of the housing or the main barrel 1232. The second stopper ST2 may be positioned on a second inner wall among the first inner wall and the second inner wall of the main barrel 1232, which face each other in the optical axis direction. The first inner wall may be adjacent to the first camera actuator or the first lens assembly. The second inner wall may be adjacent to the image sensor.

In addition, the second stopper ST2 may include a 2-1 stopper ST2a disposed at one side thereof and a 2-2 stopper ST2b disposed at the other side. The 2-1 stopper ST2a may be positioned adjacent to the first side portion. The 2-2 stopper ST2b may be positioned adjacent to the second side portion. For example, the 2-1 stopper ST2a may be disposed at one side of the first inner wall. In addition, the 2-2 stopper ST2b may be disposed at the other side of the first inner wall.

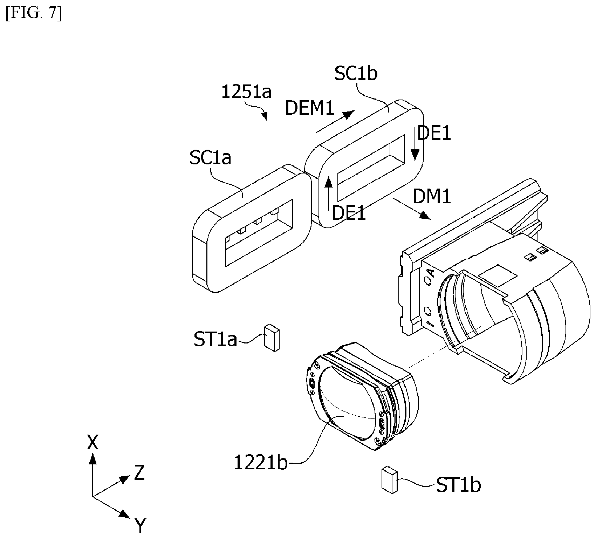

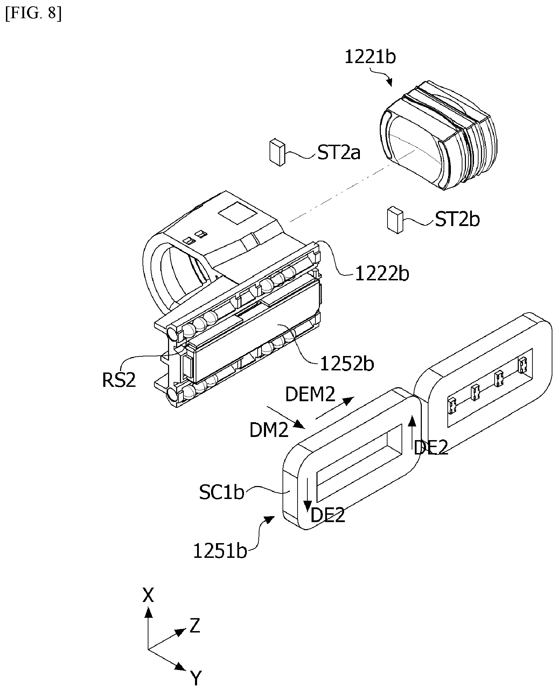

Referring to FIGS. 7 and 8, hereinafter, an electromagnetic force will be described below based on one coil. In a camera device according to an embodiment, an electromagnetic force DEM1 may be generated between the fourth magnet 1252a and the fourth coil 1251a so that the first lens assembly 1222a may move along the rail positioned on the inner surface of the housing through the first ball B1 in a direction parallel to the optical axis, that is, the third direction (the Z-axis direction) or in a direction opposite to the third direction. In this case, the first magnet 1252a and the second magnet 1252b do not move to regions facing edges of the first and second sub-coils. Accordingly, an electromagnetic force is generated based on a flow of a current in adjacent regions of the first sub-coil and the second sub-coil.

As described above, in the camera device according to the embodiment, the first magnet 1252a may be, for example, provided in the first lens assembly 1222a by a unipolar magnetization method. For example, in an embodiment, a surface (a first surface) facing an outer surface of the first magnet 1252a may be an S pole. In addition, the outer surface of the first magnet 1252a may be a surface facing the first coil 1251a. In addition, a surface opposite to the first surface may be an N pole. Accordingly, only one of the N pole and the S pole may be positioned to face the first coil 1251a. Here, the description will be given based on the outer surface of the first magnet 1252a being the S pole. Furthermore, the first coil 1251a is composed of a plurality of sub-coils, and a current may flow in opposite directions in the plurality of sub-coils. That is, in a region of the first sub-coil SC1a, which is adjacent to the second sub-coil SC2a, a current may flow in the same manner as 'DE1.'

That is, a first region of the first sub-coil SC1a and a second region of the second sub-coil SC2a may have the same current direction. The first region of the first sub-coil SC1a is a region that overlaps the first driving magnet 1252a in a direction (the second direction) perpendicular to the optical axis direction and is disposed perpendicular to the optical axis direction (e.g., disposed in the first direction). The second region of the first sub-coil SC2a is a region that overlaps the first driving magnet 1252a in a direction (the second direction) perpendicular to the optical axis direction and is disposed perpendicular to the optical axis direction (e.g., disposed in the first direction).

In addition, as illustrated, in an embodiment, when a magnetic force is applied from the S pole of the first magnet 1252a in the second direction (the Y-axis direction) and the current DE1 flows in the second coil 1251a in the first direction (the X-axis direction), the electromagnetic force DEM1 may act in the third direction (the Z-axis direction) according to the interaction of the electromagnetic force (e.g., Fleming's left hand rule).

In this case, since the first coil 1251a is fixed to the side portion of the housing, the first lens assembly 1222a on which the first magnet 1252a is disposed may be moved in a direction opposite to the Z-axis direction by the electromagnetic force DEM1 according to the current direction. That is, the optical driving magnet may move in a direction opposite to the electromagnetic force applied to the optical driving coil. In addition, the direction of the electromagnetic force may be changed depending on the current of the coil and the magnetic force of the magnet.

Accordingly, the first lens assembly 1222a may move along the rail positioned on the inner surface of the housing through the first ball B1 in a direction (both directions) parallel to the third direction or the optical axis direction. In this case, the electromagnetic force DEM1 may be controlled in proportion to the current DE1 applied to the first coil 1251a.

The first lens assembly 1222a or the second lens assembly 1222b may include the first recess RS1 in which the first ball B1 or the second ball B2 is seated. In addition, the first lens assembly 1222a or the second lens assembly 1222b may include the second recess RS2 in which the first ball B1 or the second ball B2 is seated. The first recess RS1 and the second recess RS2 may each be formed as a plurality of recesses. A length of the first recess RS1 in the optical axis direction (the Z-axis direction) may be preset. In addition, a length of the second recess RS2 in the optical axis direction (the Z-axis direction) may be preset. Accordingly, movement distances of the first ball and the second ball in the optical axis direction in the recesses may be adjusted. That is, the first recess RS1 or the second recess RS2 may be a stopper for the first or second ball.

In addition, in the camera device according to the embodiment, the second magnet 1252b may be, for example, provided on the second lens assembly 1222b by the unipolar magnetization method.

Furthermore, the first coil 1251a is composed of a plurality of sub-coils, and a current may flow in opposite directions in the plurality of sub-coils. That is, in a region of the first sub-coil SC1a, which is adjacent to the second sub-coil SC2a, a current may flow in the same manner as 'DE1.'

In addition, in an embodiment, one of an N pole and S pole of the second magnet 1252b may be positioned to face the second coil 1251b. In addition, in an embodiment, a surface (a first surface) facing an outer surface of the second magnet 1252b may be an S pole. In addition, the first surface may be an N pole. As illustrated, the following description will be given based on the first surface being the N pole.

Furthermore, the second coil 1251b is composed of a plurality of sub-coils, and a current may flow in opposite directions in the plurality of sub-coils. That is, in a region of the first sub-coil SC1b, which is adjacent to the second sub-coil SC2b, a current may flow in the same manner as 'DE2.'

In an embodiment, when a magnetic force DM2 is applied from the first surface (the N pole) of the second magnet 1252b in the second direction (the Y-axis direction) and the current DE2 flows in the second coil 1251b corresponding to the N pole in the first direction (the X-axis direction), an electromagnetic force DEM2 may act in the third direction (the Z-axis direction) according to the interaction of the electromagnetic force (e.g., Fleming's left hand rule).

In this case, since the second coil 1251b is fixed to the side portion of the housing, the second lens assembly 1222b on which the second magnet 1252b is disposed may be moved in the direction opposite to the Z-axis direction by the electromagnetic force DEM2 according to the current direction. For example, as described above, the direction of the electromagnetic force may be changed depending on the current of the coil and the magnetic force of the magnet. Accordingly, the second lens assembly 1222b may move along the rail positioned on the inner surface of the housing through the second ball B2 in a direction parallel to the third direction (the Z-axis direction). In this case, the electromagnetic force DEM2 may be controlled in proportion to the current DE2 applied to the second coil 1251b.

Referring to FIG. 9, in the camera device according to the embodiment, the driving part may provide driving forces F3A, F3B, F4A, and F4B that move the first lens assembly 1222a and the second lens assembly 1222b of the lens part 1220 in the third direction (the Z-axis direction). As described above, the driving part may include the optical driving coil 1251 and the optical driving magnet 1252. In addition, the lens part 1220 may be moved in the third direction (the Z-axis direction) by the electromagnetic force generated between the optical driving coil 1251 and the optical driving magnet 1252 .

In this case, the first coil 1251a and the second coil 1251b may be disposed in the holes formed in the side portions (e.g., the first side portion and the second side portion) of the housing 1230. In addition, the second coil 1251b may be electrically connected to the second board 1272. The first coil 1251a may be electrically connected to the first board 1271. Accordingly, the first coil 1251a and the second coil 1251b may receive a driving signal (e.g., a current) from a driving driver on the circuit board of the circuit board 1300 through the board part 1270.

In this case, the first lens assembly 1222a on which the first magnet 1252a is seated may be moved in the third direction (the Z-axis direction) by the electromagnetic forces F3A and F3B between the first coil 1251a and the first magnet 1252a. In addition, the second lens group 1221b seated on the first lens assembly 1222a may also move in the third direction.

In addition, the second lens assembly 1222b on which the second magnet 1252b is seated may be moved in the third direction (the Z-axis direction) by the electromagnetic forces F4A and F4B between the second coil 1251b and the second magnet 1252b. In addition, the third lens group 1221c seated on the second lens assembly 1222b may also move in the third direction.

Therefore, as described above, a focal length or magnification of the optical system may be changed by moving the second lens group 1221b and the third lens group 1221c. In an embodiment, magnification may be changed by moving the second lens group 1221b. That is, zooming may be performed. In addition, a focus may be adjusted by moving the third lens group 1221c. That is, auto focusing may be performed.

In addition, the second camera actuator may be a fixed zoom or a continuous zoom depending on the movement method of the second lens group (or the third lens group).

Furthermore, the first Hall sensor 1253a and the second Hall sensor 1253b may be disposed on at least one of the first sub-coil and the second sub-coil. For example, the first Hall sensor 1253a and the second Hall sensor 1253b may overlap each other in the second direction. Alternatively, the first Hall sensor 1253a and the second Hall sensor 1253b may not overlap each other in the second direction. Alternatively, the first Hall sensor 1253a and the second Hall sensor 1253b may partially overlap each other in the second direction.

According to the driving of the first lens assembly, the first lens assembly 1222a may be positioned as close as possible to the first stoppers ST1a and ST1b. In this case, a distance of the first lens assembly 1222a between the guiding portion and the 1-1 stopper ST1a may decrease. In addition, a distance between the 1-2 stopper ST1b and the lens protruding portion of the first lens assembly may also decrease.

That is, when the first lens assembly 1222a maximally moves toward the first camera actuator, the first lens assembly 1222a may collide with the 1-1 stopper ST1a and the 1-2 stopper ST1b. The 1-1 stopper and the 1-2 stopper may collide simultaneously or sequentially with the movement of the first lens assembly. In the present embodiment, the 1-1 stopper and the 1-2 stopper may collide simultaneously with the movement of the first lens assembly.

Accordingly, even when a lens made of glass is disposed in the first lens assembly 1222a (or the second lens assembly) (e.g., a frontmost end), the collision at a mecha position of the first lens assembly 1222a (or the second lens assembly) can be minimized. That is, a cracking phenomenon of the lens can be suppressed. For example, at least one of the first lens assembly and the second lens assembly may include a lens including glass. In addition, the glass may be positioned at the outermost side in the first lens assembly or the second lens assembly.

As a modified example, when a sequential collision occurs, shock absorption may occur primarily in the guiding part having a large volume or the like, thereby minimizing damage to the first lens assembly.

Likewise, the 2-2 stopper ST2b may collide with the second lens assembly 1222b. That is, when the second lens assembly 1222b maximally moves toward the image sensor or in the optical axis direction, the second lens assembly 1222b may collide with the 2-2 stopper ST2b and the 2-1 stopper ST2a. Accordingly, even when a lens made of glass is disposed in the second lens assembly 1222b, a collision at the mecha position of the first lens assembly 1222a can be minimized. That is, a cracking phenomenon of the lens can be suppressed. The case of the modified example is also the same.

That is, when the first lens assembly 1222a moves, the 1-1 stopper ST1a and the 1-2 stopper ST1b may be in contact with the first lens assembly 1222a. When the first lens assembly 1222a maximally moves in a mecha-to-mecha manner, the first lens assembly 1222a may be in contact with the first stoppers ST1a and ST1b. For example, the first lens assembly 1222a may move to an end portion in the optical axis direction or an end portion in the direction opposite to the optical axis direction. In this case, the first lens assembly 1222a may move to a point at which it is in contact with the first stopper or the second stopper. For example, when the first lens assembly 1222a moves, the camera module may be in a tele or wide state. When the first lens assembly 1222a is in contact with the first stopper, the camera module may be in a wide state, and when the first lens assembly 1222a is in contact with the second stopper, the camera module may be in a tele state.

The impact according to the movement of the first lens assembly 1222a and the second lens assembly 1222b can be reduced by the first stopper. Accordingly, as described above, it is possible to improve the reliability of the first lens assembly 1222a and the second lens assembly 1222b and the reliability of the second lens group and the third lens group therein. Furthermore, since movement ranges of the first lens assembly 1222a and the second lens assembly 1222b are limited, driving of accurate magnification or the like may be performed.

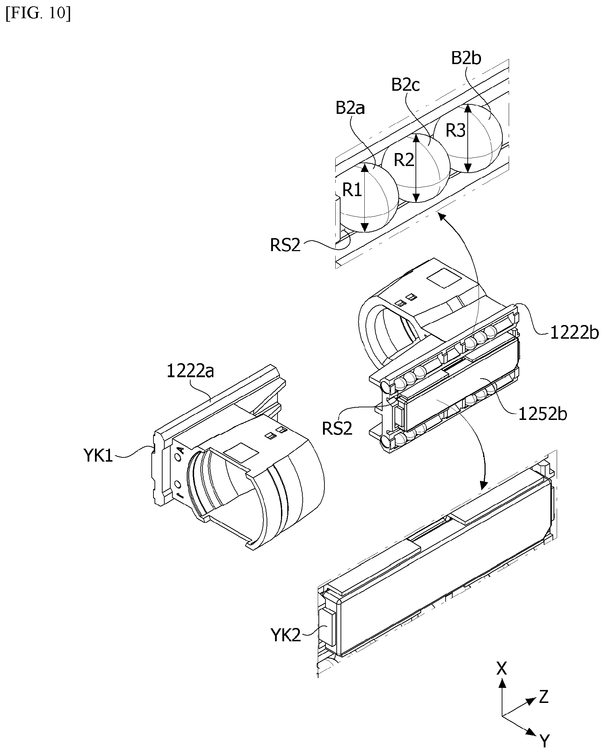

FIG. 10 is a perspective view of some components of the second camera actuator according to the embodiment.

Referring to FIG. 10, the first lens assembly 1222a and the second lens assembly 1222b may be disposed to be spaced apart from each other in the optical axis direction (the Z-axis direction).

The second guide part may be disposed to face the first guide part. In an embodiment, at least parts of the first guide part and the second guide part may overlap each other in the second direction (the Y-axis direction). With this configuration, it is possible to increase the space efficiency of the driving part for moving the first and second lens assemblies in the second camera actuator, thereby easily miniaturizing the second camera actuator.

As described above, the first ball, the first coil, and the like may be disposed adjacent to each other, and the second ball, the second coil, and the like may be disposed adjacent to each other.

In addition, according to the embodiment, each of the first and second lens assemblies 1222a and 1222b may include yokes YK1 and YK2 disposed on the side surfaces thereof.

A first yoke YK1 may be positioned on the side surface of the first lens assembly 1222a. A second yoke YK2 may be positioned on the side surface of the second lens assembly 1222b. At least parts of the first yoke YK1 and the second yoke YK2 may extend outward. Accordingly, the first yoke YK1 may surround at least a part of a side surface of the first magnet 1252a. As illustrated, the first yoke YK1 may be formed in various structures that surround an inner surface and a part of the side surface of the first magnet 1252a. For example, the first yoke YK1 may be formed of partitioned members, and each partitioned member may be positioned on the inner surface and a part of the side surface of the first magnet 1252a. Accordingly, it is possible to increase bonding strength between the unipolarly magnetized optical driving magnet and the yoke. Likewise, the second yoke YK2 may surround at least a part of the side surface of the second magnet 1252b. As illustrated, the second yoke YK2 may be formed in various structures that surround an inner surface and a part of the side surface of the second magnet 1252b. For example, the second yoke YK2 may be formed of partitioned members, and each partitioned member may be positioned on the inner surface and a part of the side surface of the second magnet 1252b.

Furthermore, the yoke may be positioned to be coupled to both the optical driving coil and the optical driving magnet.

In addition, a plurality of balls may be positioned on the outer surface of the lens assembly. As described above, the first ball may be positioned on the outer surface of the first lens assembly 1222a. The second ball may be positioned on the outer surface of the second lens assembly 1222b.

The first ball and the second ball may each be formed as a plurality of balls. For example, the first ball may be formed as a plurality of balls and disposed side by side in the optical axis direction (the Z-axis direction) in one recess of the first lens assembly 1222a. In addition, the second ball may be formed as a plurality of balls and disposed side by side in the optical axis direction (the Z-axis direction) in one recess of the second lens assembly 1222b.

For example, the second ball B2 may include a first sub-ball B2a, a second sub-ball B2b, and a third sub-ball B2c. The first sub-ball B2a, the second sub-ball B2b, and the third sub-ball B2c may be disposed side by side in the optical axis direction. Accordingly, the first sub-ball B2a, the second sub-ball B2b, and the third sub-ball B2c may at least partially overlap each other in the optical axis direction.

In addition, the first sub-ball B2a and the second sub-ball B2b may be positioned at edges among the plurality of balls. The third sub-ball B2c may be positioned between the first sub-ball B2a and the second sub-ball B2b.

The plurality of balls may have the same or different diameters. For example, at least some of diameters R1, R3, and R2 of the first sub-ball B2a, the second sub-ball B2b, and the third sub-ball B2c may be the same. In addition, the diameters R1, R3, and R2 of the first sub-ball B2a, the second sub-ball B2b, and the third sub-ball B2c may be different.

In an embodiment, the diameters R1 and R3 of the balls (the first and second sub-balls) positioned at the edges may be smaller than the diameter R2 of the balls (the third sub-ball) positioned therein among the plurality of balls. For example, the diameters R1 and R3 of the first sub-ball B2a and the second sub-ball B2b may be smaller than the diameter R2 of the third sub-ball B2c. With this configuration, the movement of the lens assembly by the plurality of balls can be performed accurately without being biased to one side.

The description of the plurality of balls may be applied to the first ball in the same manner.

In addition, the optical driving magnet may be formed as a plurality of optical driving magnets as described above and formed of the first magnet and the second magnet. In addition, the first magnet and the second magnet may be disposed to face each other and have the same pole disposed outside. That is, the first surface (the outer surface) of the first magnet and the first surface (the outer surface) of the second magnet may have the first pole. In addition, the second surface (the inner surface) of the first magnet and the second surface (the inner surface) of the second magnet may have the second pole.

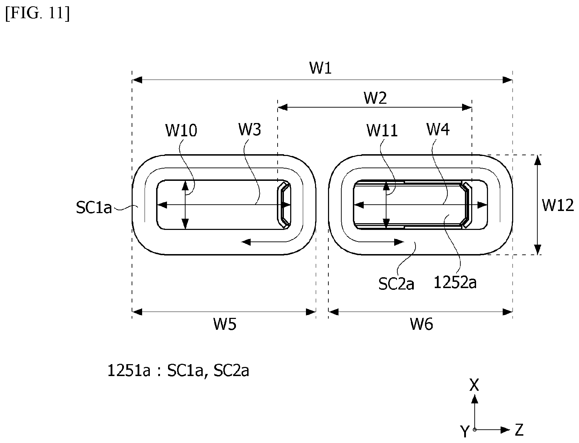

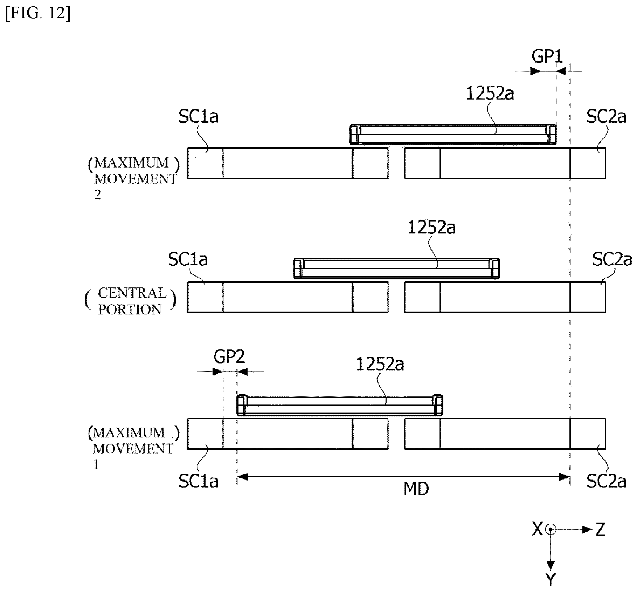

FIG. 11 is a view illustrating an optical driving coil, an optical driving magnet, and a yoke according to the embodiment, and FIG. 12 is a view for describing a movement of the optical driving magnet by a driving unit according to the embodiment.

Referring to FIGS. 11 and 12, a length W5 of the first sub-coil SC1a in the optical axis direction (the Z-axis direction) may be equal to a length W6 of the second sub-coil SC2a in the optical axis direction (the Z-axis direction). With this configuration, the driving force control by the first sub-coil SC1a and the second sub-coil SC2a may be easily performed.

In addition, a total length W1 (or a maximum length) of the optical driving coil in the optical axis direction (the Z-axis direction) may be greater than a length W2 (a maximum length) of the optical driving magnet 1252a in the optical axis direction (the Z-axis direction). With this configuration, a stroke by the optical driving magnet may be performed maximally. Furthermore, a long stroke by the optical driving magnet of the unipolar magnetization may be performed.

In addition, in an embodiment, a maximum movement distance MD of the first lens assembly in the optical axis direction may be greater than a length of a hole (or a hollow) of the first sub-coil SC1a in a short-axis direction (the first direction) and may be equal to or smaller than a length W3 of the hole (or the hollow) of the first sub-coil SC1a in a long-axis direction (the optical axis direction or the third direction).

In addition, the maximum movement distance MD of the first lens assembly may be greater than a length of a hole (or a hollow) of the second sub-coil SC2a in the short-axis direction (the first direction) and may be equal to or smaller than a length W4 of the hole (or the hollow) of the second sub-coil SC2a in the long-axis direction (the optical axis direction or the third direction).

In addition, in an embodiment, a maximum movement distance of the second lens assembly in the optical axis direction may be greater than a length of a hole (or a hollow) of the third sub-coil SC1b in the short-axis direction (the first direction) and may be equal to or smaller than a length of the hole (or the hollow) of the third sub-coil SC1b in the long-axis direction (the optical axis direction or the third direction).

In addition, the maximum movement distance of the first lens assembly may be greater than a length of a hole (or a hollow) of the fourth sub-coil SC2b in the short-axis direction (the first direction) and may be equal to or smaller than a length of the hole (or the hollow) of the fourth sub-coil SC2b in the long-axis direction (the optical axis direction or the third direction).

Furthermore, the length W3 of an inner hole of the first sub-coil SC1a in the optical axis direction may be equal to the length W4 of an inner hole of the second sub-coil SC2a in the optical axis direction.

In addition, a length W2 of the driving magnet 1252a in the optical axis direction (the Z-axis direction) may be greater than the length W3 of the inner hole of the first sub-coil SC1a in the optical axis direction. In addition, the length W2 of the driving magnet 1252a in the optical axis direction (the Z-axis direction) may be greater than the length W3 of the inner hole of the first sub-coil SC1a in the optical axis direction. Accordingly, the optical driving magnet may move along the optical axis within the total length in the optical axis direction of the optical driving coil.

In addition, the length W2 of the optical driving magnet (or the first and second driving magnets) in the optical axis direction (the Z-axis direction) may be greater than the lengths W3 and W4 of one of the hollow (or the hole) of each of the sub-coils (the first to fourth sub-coils) in the optical axis direction.

The length W2 (the maximum length) of the optical driving magnet in the optical axis direction (the Z-axis direction) may be smaller than the length W5 of the first sub-coil SC1a in the optical axis direction (the Z-axis direction).

With this configuration, no counter electromotive force is generated during the movement of the lens assembly in the optical axis direction, and a long stroke may be implemented.

The length W2 (the maximum length) of the optical driving magnet (or the first and second driving magnets) in the optical axis direction (the Z-axis direction) may be 0.6 times or less the maximum length W1 of the corresponding first driving coil in the optical axis direction. Preferably, the length W2 (the maximum length) of the optical driving magnet (or the first and second driving magnets) in the optical axis direction (the Z-axis direction) may be 0.55 times or less the maximum length W1 of the corresponding first driving coil in the optical axis direction. More preferably, the length W2 (the maximum length) of the optical driving magnet (or the first and second driving magnets) in the optical axis direction (the Z-axis direction) may be 0.5 times or less the maximum length W1 of the corresponding first driving coil in the optical axis direction. Accordingly, the camera device may provide a long stroke in a state of minimizing a counter electromotive force.

The maximum movement distance MD of the first lens assembly in the optical axis direction may be smaller than the length W2 (the maximum length) of the optical driving magnet (or the first and second driving magnets) in the optical axis direction (the Z-axis direction). For example, the maximum movement distance MD of the first lens assembly in the optical axis direction may be 0.66 times or more and 0.92 times or less the length W2 (the maximum length) of the optical driving magnet (or the first and second driving magnets) in the optical axis direction (the Z-axis direction). Accordingly, the generation of the counter electromotive force can be suppressed as much as possible.

In addition, in an embodiment, the total length W1 (or the maximum length) of the optical driving coil in the optical axis direction (the Z-axis direction) may range from 18 mm to 20 mm. Furthermore, the length W2 of the optical driving magnet in the optical axis direction (the Z-axis direction) may range from 8 mm to 12 mm. In addition, the length W3 of the hole (or the hollow in the long-axis direction (the optical axis direction or the third direction) of the first sub-coil SC1a may range from 5.6 mm to 8.7 mm. In addition, the length W4 of the hole (or the hollow in the long-axis direction (the optical axis direction or the third direction) of the second sub-coil SC2a may range from 5.6 mm to 8.7 mm.

The length W5 of the first sub-coil SC1a in the optical axis direction (the Z-axis direction) may range from 8 mm to 10 mm. However, as described above, the length W5 of the first sub-coil SC1a in the optical axis direction (the Z-axis direction) may be greater than or equal to the length W2 of the optical driving magnet in the optical axis direction (the Z-axis direction).

In addition, the length W6 of the second sub-coil SC2a in the optical axis direction (the Z-axis direction) may range from 8 mm to 10 mm. However, as described above, the length W5 of the second sub-coil SC2a in the optical axis direction (the Z-axis direction) may be greater than or equal to the length W2 of the optical driving magnet in the optical axis direction (the Z-axis direction).

In addition, in an embodiment, depending on the unipolar magnetization of the optical driving magnet, a current may flow in different directions in the first sub-coil SC1a and the second sub-coil SC2a. For example, the current may flow in one of clockwise and counterclockwise in the first sub-coil SC1a, and the current may flow in the other of clockwise and counterclockwise in the second sub-coil SC2a.

Furthermore, the length W2 of the optical driving magnet in the optical axis direction (the Z-axis direction) may be greater than the movement distance of the lens assembly in the optical axis direction. That is, the length W2 of the optical driving magnet in the optical axis direction (the Z-axis direction) may be greater than the maximum movement distance of the first lens assembly or the maximum movement of the second lens assembly. With this configuration, the driving force for the movement in the optical axis direction can be safely provided.

In addition, the lens assembly may be formed as a plurality of lens assemblies as described above, and the lens assembly disposed at the rear end among the plurality of lens assemblies may have a greater movement distance in the optical axis direction than the lens assembly disposed at the front end.

For example, the movement distance of the first lens assembly 1222a in the optical axis direction (the Z-axis direction) may be smaller than the movement distance of the second lens assembly 1222b in the optical axis direction (the Z-axis direction). That is, the movement distance of the second lens assembly 1222b in the optical axis direction may be greater than the movement distance of the first lens assembly in the optical axis direction. The first lens assembly 1222a may be positioned at the front end of the second lens assembly 1222b.

In addition, in the camera actuator according to the embodiment, the optical driving magnet 1252a may move from "center" to "maximum movement 1" or "maximum movement 2." Here, in the case of "center," the optical driving magnet 1252a may overlap the first sub coil SC1a and the third sub coil SC2a in the second direction. That is, both the first sub-coil SC1a and the second sub-coil SC2a may face the optical driving magnet.

In addition, since the first sub-coil and the second sub-coil are coils that actually provide a driving force by an electromagnetic force and extend in the first direction, a region in which the first sub-coil SC1a overlaps the optical driving magnet 1252a may be the same as a region in which the second sub-coil SC2a overlaps the optical driving magnet 1252a. Therefore, it is possible to minimize the generation of the counter electromotive force, thereby implementing a long stroke.

In addition, the case of "maximum movement 1" may correspond to a case in which the optical driving magnet 1252a maximally moves in a direction opposite to the third direction (the Z-axis direction). In this case, the optical driving magnet 1252a may have a region overlapping the first sub-coil SC1a larger than a region overlapping the second sub-coil SC2a. Furthermore, at least a part of the optical driving magnet 1252a may overlap the inner hole of the first sub-coil SC1a. More specifically, the optical driving magnet 1252a may be spaced a predetermined distance GP2 from an edge of the inner hole of the first sub-coil SC1a in the optical axis direction. With this configuration, the counter electromotive force generated from an end portion of the first sub-coil SC1a can be reduced. For example, the optical driving magnet 1252a may be moved with a maximum stroke to a region that does not overlap the end portion of the first sub-coil SC1a in the direction opposite to the optical axis direction in the second direction (the Y-axis direction).

In addition, the case of "maximum movement 2" may correspond to a case in which the optical driving magnet 1252a maximally moves in the third direction (the Z-axis direction). In this case, the optical driving magnet 1252a may have a region overlapping the second sub-coil SC2a larger than a region overlapping the first sub-coil SC1a. Furthermore, at least a part of the optical driving magnet 1252a may overlap the inner hole of the second sub-coil SC2a. More specifically, the optical driving magnet 1252a may be spaced a predetermined distance GP1 from an edge of the inner hole of the second sub-coil SC2a in the optical axis direction. With this configuration, the counter electromotive force generated from an end portion of the second sub-coil SC2a can be reduced. For example, the optical driving magnet 1252a may be moved with a maximum stroke to a region that does not overlap the end portion of the second sub-coil SC2a in the optical axis direction in the second direction (the Y-axis direction).

Accordingly, even when the length of the optical driving magnet 1252a in the optical axis direction is small, the long stroke of the camera actuator can be efficiently implemented through the unipolar magnetization and the current direction of the plurality of optical driving coils.

In addition, the maximum movement distance of the optical driving magnet 1252a may correspond to lengths of the first and second recesses accommodating the first ball or the second ball in the above-described first lens assembly in the optical axis direction. In addition, the maximum movement distance of the optical driving magnet 1252a may correspond to a distance of the optical driving magnet 1252a moving from the maximum movement 1 to the maximum movement 2 in the optical axis direction (the Z-axis direction). Alternatively, the maximum movement distance of the optical driving magnet 1252a may correspond to a distance between stoppers that restrict the movement of the first ball or the second ball in the optical axis direction. Alternatively, the maximum moving distance of the optical driving magnet 1252a may be a maximum distance that a bobbin may move and may correspond to a separation distance in the optical axis direction between a stopper positioned in the optical axis direction and a stopper positioned in the direction opposite to the optical axis direction with respect to the bobbin.

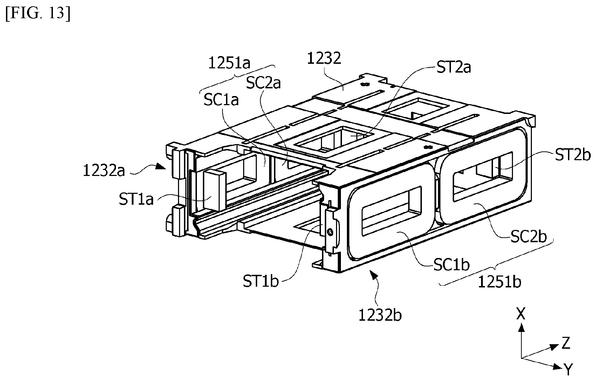

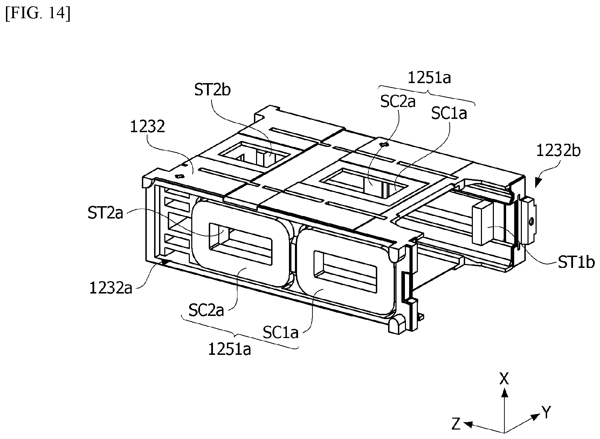

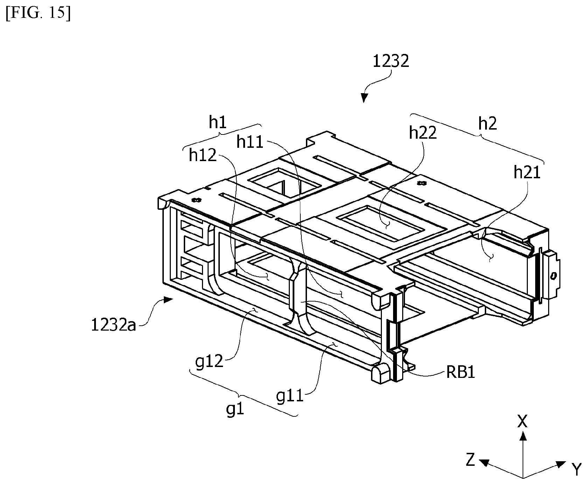

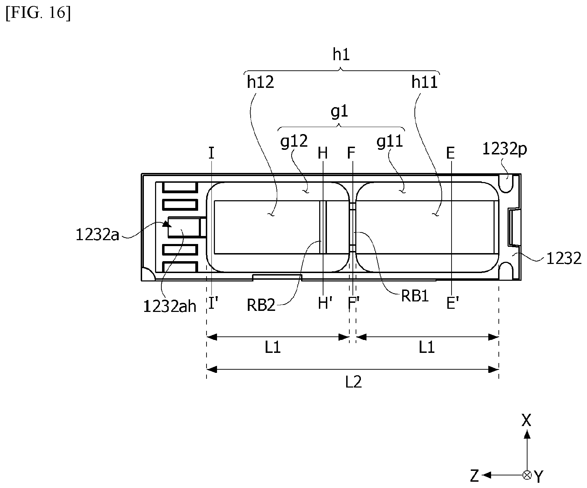

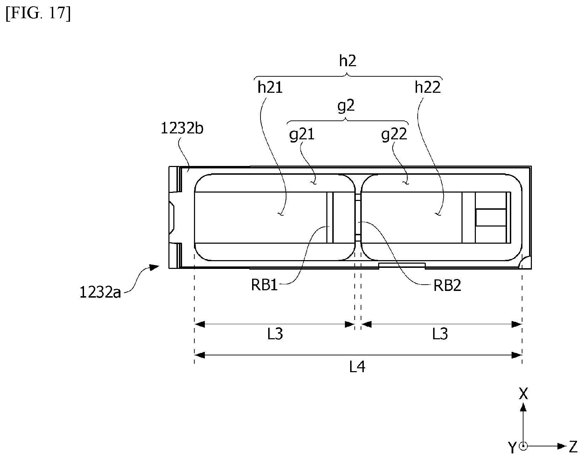

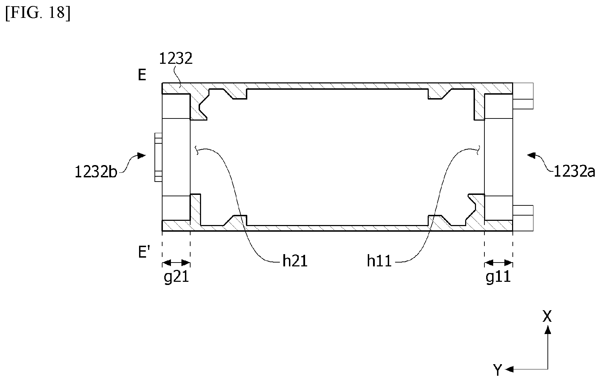

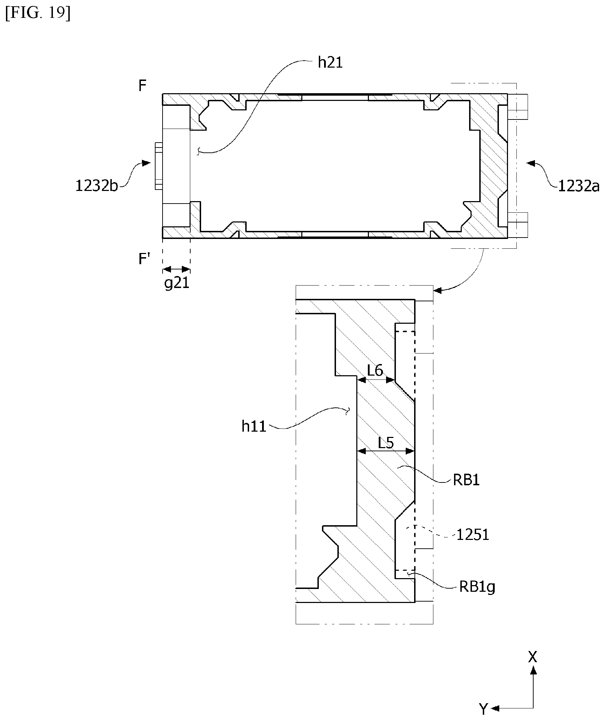

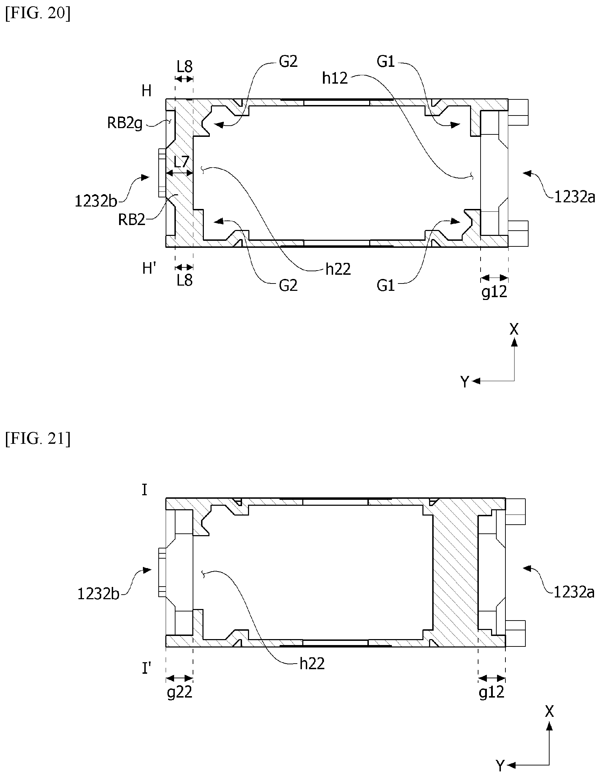

FIG. 13 is a perspective view illustrating a housing, a coil, and a stopper of the second camera actuator according to the embodiment, FIG. 14 is another perspective view illustrating the housing, the coil, and the stopper of the second camera actuator according to the embodiment, FIG. 15 is a perspective view of the housing of the second camera actuator according to the embodiment, FIG. 16 is a side view of the housing of the second camera actuator according to the embodiment, FIG. 17 is another side view of the housing of the second camera actuator according to the embodiment, FIG. 18 is a view along line EE' in FIG. 16, FIG. 19 is a view along line FF' in FIG. 16, FIG. 20 is a view along line HH' in FIG. 16, and FIG. 21 is a view along line II' in FIG. 16.

Referring to FIGS. 13 to 17, in the second camera actuator according to the embodiment, a housing (e.g., a second housing) may include a first side portion 1232a and a second side portion 1232b. The first side portion 1232a may be positioned at one side of the housing. For example, the first side portion 1232a may be adjacent to the first driving part. Accordingly, the first driving part may easily move the first lens assembly in the optical axis direction.

The second side portion 1232b may be positioned at the other side of the housing. The second side portion 1232b may be adjacent to the second driving part. Accordingly, the second driving part may easily move the second lens assembly in the optical axis direction.

The first side portion 1232a and the second side portion 1232b may be positioned opposite to each other. In an embodiment, the first side portion 1232a and the second side portion 1232b may be positioned to correspond to each other. In the housing or the main barrel 1232, the first side portion 1232a and the second side portion 1232b may be positioned to face each other.

As described above, the driving part may include the first driving part and the second driving part. The first driving part may include the first coil 1251a and the first magnet facing the first coil 1251a. In addition, the second driving part may include the second coil 1251b and the second magnet facing the second coil 1251b.

In an embodiment, the first coil 1251a may include the first sub-coil SC1a and the second sub-coil SC2a that are sequentially disposed in the optical axis direction. The first sub-coil SC1a and the second sub-coil SC2a may be disposed in the main barrel 1232. In an embodiment, the first sub-coil SC1a and the second sub-coil SC2a may be positioned on the first side portion 1232a of the main barrel 1232. For example, the first sub-coil SC1a and the second sub-coil SC2a may be positioned in a first groove g1 positioned in the first side portion 1232a of the main barrel 1232.

More specifically, the first side portion 1232a according to the embodiment may include the first groove g1 and a first reinforcing member RB1.

The first coil 1251a may be disposed in the first groove g1. In an embodiment, the first groove g1 may include a first sub-groove g11 and a second sub-groove g12. The first sub-groove g11 and the second sub-groove g12 may be disposed sequentially in the optical axis direction. The first sub-coil SC1a may be positioned in the first sub-groove g11. The second sub-coil SC2a may be positioned in the second sub-groove g12.

At least a part of the first reinforcing member RB1 may overlap the first coil 1251a in the optical axis direction. In addition, the first reinforcing member RB1 may be positioned between the first sub-coil SC1a and the second sub-coil SC2a. For example, the first reinforcing member RB1 may overlap the first sub-coil SC1a and the second sub-coil SC2a in the optical axis direction (the Z-axis direction). That is, the housing 1230 positioned between the first sub-groove g11 and the second sub-groove g12 may overlap the first coil 1251 in the optical axis direction. For example, the housing 1230 positioned between the first sub-groove g11 and the second sub-groove g12 may overlap the first sub-coil SC1a in the optical axis direction. In addition, the housing 1230 disposed between the first sub-groove g11 and the second sub-groove g12 may overlap the second sub-coil SC2a in the optical axis direction.

In addition, the first reinforcing member RB1 may be positioned in a region between the first sub-groove g11 and the second sub-groove g12. For example, at least a part of the first reinforcing member RB1 may overlap the first sub-groove g11 and the second sub-groove g12 in the optical axis direction. In addition, the first reinforcing member RB1 may be a rib or reinforcing bar of the first groove (or the first sub-groove g11 and the second sub-groove g12). With this configuration, the reliability (e.g., the rigidity) of the main barrel 1232 by the first groove g1 can be improved. In addition, the distortion or deterioration of the straightness of the first groove g1 can also be prevented.

Furthermore, by the first reinforcing member RB1, the first sub-coil SC1a and the second sub-coil SC2a may be disposed to be spaced apart from each other in the optical axis direction. For example, a gap between the first sub-coil SC1a and the second sub-coil SC2a may be smaller than a width of the sub-coils (e.g., the first sub-coil SC1a and the second sub-coil SC2a). For example, a gap between the first sub-coil SC1a and the second sub-coil SC2a may be 0.5 times or less a width of the sub-coils (e.g., the first sub-coil SC1a and the second sub-coil SC2a). For example, a width of the first reinforcing member RB1 may be smaller than a width of each sub-coil (e.g., the first sub-coil SC1a and the second sub-coil SC2a). For example, the width of the first reinforcing member RB1 in the optical axis direction may be 0.5 times or less than the width of each sub-coil (e.g., the first sub-coil SC1a and the second sub-coil SC2a) in the optical axis direction. With this configuration, the second camera actuator according to the embodiment can be easily miniaturized and can have improved rigidity and at the same time, maintain the electromagnetic force.

The second coil 1251b may include the third sub-coil SC1b and the fourth sub-coil SC2b that are sequentially disposed in the optical axis direction. The third sub-coil SC1b and the fourth sub-coil SC2b may be disposed in the main barrel 1232. In an embodiment, the third sub-coil SC1b and the fourth sub-coil SC2b may be positioned on the second side portion 1232b of the main barrel 1232. For example, the third sub-coil SC1b and the fourth sub-coil SC2b may be positioned in the second groove g2 positioned in the second side portion 1232b of the main barrel 1232.

More specifically, the second side portion 1232b according to the embodiment may include the second groove g2 and the second reinforcing member RB2.

The second coil 1251b may be disposed in the second groove g2. In an embodiment, the second groove g2 may include a third sub-groove g21 and a fourth sub-groove g22. The third sub-groove g21 and the fourth sub-groove g22 may be disposed sequentially in the optical axis direction. The third sub-coil SC1b may be positioned in the third sub-groove g21. The fourth sub-coil SC2b may be positioned in the fourth sub-groove g22.

At least a part of the second reinforcing member RB2 may overlap the second coil 1251b in the optical axis direction. In addition, the second reinforcing member RB2 may be positioned between the third sub-coil SC1b and the fourth sub-coil SC2b. For example, the second reinforcing member RB2 may overlap the third sub-coil SC1b and the fourth sub-coil SC2b in the optical axis direction (the Z-axis direction).

In addition, the second reinforcing member RB2 may be positioned in a region between the third sub-groove g21 and the fourth sub-groove g22. For example, at least a part of the second reinforcing member RB2 may overlap the third sub-groove g21 and the fourth sub-groove g22 in the optical axis direction. In addition, the second reinforcing member RB2 may be a rib or reinforcing bar of the second groove (or the third sub-groove g21 and the fourth sub-groove g22). With this configuration, the reliability (e.g., the rigidity) of the main barrel 1232 by the second groove g2 can be improved. In addition, the distortion or deterioration of the straightness of the second groove g2 can also be prevented.

Furthermore, by the second reinforcing member RB2, the third sub-coil SC1b and the fourth sub-coil SC2b may be disposed to be spaced apart from each other in the optical axis direction. For example, a gap between the third sub-coil SC1b and the fourth sub-coil SC2b may be smaller than a width of the sub-coils (e.g., the third sub-coil SC1b and the fourth sub-coil SC2b). For example, a gap between the third sub-coil SC1b and the fourth sub-coil SC2b may be 0.5 times or less a width of the sub-coils (e.g., the third sub-coil SC1b and the fourth sub-coil SC2b). With this configuration, the second camera actuator according to the embodiment can be easily miniaturized and can have improved rigidity and at the same time, maintain the electromagnetic force.

In addition, a length L4 of the second coil 1251b in the optical axis direction (the Z-axis direction) may be greater than a length L2 of the first coil 1251a in the optical axis direction. That is, lengths of the first coil 1251a and the second coil 1251b that are opposite to or face each other may be different. In addition, the first coil 1251a and the second coil 1251b may be positioned asymmetrically with respect to the optical axis. That is, there may be a difference in maximum movement distances between the first lens assembly and the second lens assembly corresponding to a difference between the lengths of the first coil 1251a and the second coil 1251b. Accordingly, it is possible to easily design a lens assembly or a movement assembly, which has different strokes.

In addition, the first coil 1251a and the second coil 1251b may be misaligned in at least some regions in the direction (the second direction, that is, the Y-axis direction) perpendicular to the optical axis. That is, the first coil 1251a and the second coil 1251b may not partially overlap each other in the second direction.

In addition, the length of the coil may correspond to the length of the groove. For example, the length of the first coil 1251a may correspond to the length of the first groove g1. In addition, the length of the second coil 1251b may correspond to the length of the second groove g2. Accordingly, the length L2 of the first groove g1 may be smaller than the length L4 of the second groove g2.

In addition, the length L1 of the first sub-coil SC1a or the second sub-coil SC2a in the optical axis direction may be smaller than the length L3 of the third sub-coil SC1b or the fourth sub-coil SC2b in the optical axis direction. Alternatively, the length L3 of the third sub-coil SC1b or the fourth sub-coil SC2b in the optical axis direction may be larger than the length L1 of the first sub-coil SC1a or the second sub-coil SC2a in the optical axis direction.

Correspondingly, the length of the first sub-groove g11 or the second sub-groove g12 in the optical axis direction may correspond to the length L1 of the first sub-coil SC1a or the second sub-coil SC2a in the optical axis direction. In addition, the length of the third sub-groove g2a or the fourth sub-groove g22 may correspond to the length L3 of the third sub-coil SC1b or the fourth sub-coil SC2b in the optical axis direction.

Accordingly, the length L1 of the first sub-groove g11 or the second sub-groove g12 in the optical axis direction may be smaller than the length L3 of the third sub-groove g2a or the fourth sub-groove g22 in the optical axis direction.

In addition, more accurately, the length L2 of the first coil 1251a in the optical axis direction may be the sum of the total length of the first sub-coil SC1a and the second sub-coil SC2a in the optical axis direction and the length of the first reinforcing member RB1 in the optical axis direction.

Likewise, the length L4 of the second coil 1251b in the optical axis direction may be the sum of the total length of the third sub-coil SC1b and the fourth sub-coil SC2b in the optical axis direction and the length of the second reinforcing member RB2 in the optical axis direction.

In addition, correspondingly, the length L1 of the first sub-groove g11 or the second sub-groove g12 in the optical axis direction may be smaller than the length L3 of the third sub-groove g21 or the fourth sub-groove g22 in the optical axis direction. That is, the length L3 of the third sub-groove g21 or the fourth sub-groove g22 in the optical axis direction may be larger than the length L1 of the third sub-groove g11 or the fourth sub-groove g12 in the optical axis direction.

In addition, the first sub-groove g11 or the second sub-groove g12 may be asymmetrical with the third sub-groove g21 or the fourth sub-groove g22 with respect to the optical axis direction. Accordingly, the first sub-groove g11 or the second sub-groove g12 may not at least partially overlap the third sub-groove g21 or the fourth sub-groove g22 in the direction (the second direction) perpendicular to the optical axis. That is, the first sub-groove g11 or the second sub-groove g12 may be misaligned with the third sub-groove g21 or the fourth sub-groove g22 in the second direction in at least some regions.

In addition, the first groove g1 and the second groove g2 may have different areas. For example, an area of the first groove g1 may be smaller than an area of the second groove g2. Furthermore, the areas of the first sub-groove g11 and the second sub-groove g12 may be smaller than areas of the third sub-groove g21 and the fourth sub-groove g22.

In addition, the first groove g1 or the second groove g2 may be connected to a hole 1231ah (or a groove) formed in the side portion of the second housing 1232. That is, at least a part of the first groove g1 may be connected to the additional hole 1231ah. With this configuration, coupling between the sub-coil and the groove can be easily managed through the additional hole 1231ah. That is, the first coil or the second coil can be easily seated in the first groove g1 or the second groove g2.

Furthermore, the side portion of the second housing 1232 may further include an additional protrusion 1232p extending outward. The additional protrusion 1232p may be disposed to be misaligned with the first groove g1 and the second groove g2 in the second direction. Furthermore, the additional protrusion 1232p may be disposed at an edge of each side portion of the second housing 1232. Furthermore, at least a part of the additional protrusion 1232p may overlap the board part 1270 in the optical axis direction. The additional protrusion 1232p may be disposed outside the board part 1270 to prevent the board 1270 from being removed from the second housing 1232. That is, the bonding strength between the board part 1270 and the second housing 1232 can be increased.

Furthermore, the side portion or outer surface of the second housing 1232 may have various fillet or chamfered shapes.

**In** addition, the first reinforcing member RB1 and the second reinforcing member RB2 may be disposed to be misaligned in a direction perpendicular to the optical axis direction. The first reinforcing member RB1 and the second reinforcing member RB2 may partially overlap each other in the second direction (the Y-axis direction) according to the length of the camera actuator. However, the first reinforcing member RB1 and the second reinforcing member RB2 may be misaligned in the second direction at least in some regions. That is, the first reinforcing member RB1 and the second reinforcing member RB2 may not overlap each other in the second direction at least in some regions. Accordingly, the reinforcing member may be disposed to correspond to the size of the driving part in the second camera actuator according to the embodiment. Accordingly, the reliability of the housing can be improved, and the rigidity can be increased in a balanced manner without being bent in one region.

**In** addition, as a usage example, the first reinforcing member RB1 and the second reinforcing member RB2 may not overlap each other in the direction perpendicular to the optical axis direction.

According to the embodiment, the first reinforcing member RB1 may be positioned in a central portion of the first groove g1. For example, the first reinforcing member RB1 may be positioned correspondingly on a bisector of the first groove g1 in the optical axis direction.

In addition, the second reinforcing member RB2 may be positioned in a central portion of the second groove g2. For example, the second reinforcing member RB2 may be positioned correspondingly on a bisector of the second groove g2 in the optical axis direction.

In addition, upper surfaces of the first reinforcing member RB1 and the second reinforcing member RB2 may be formed coplanarly with outer surfaces of the first side portion 1232a and the second side portion 1232b. For example, the upper surface of the first reinforcing member RB1 may be formed coplanarly with the outer surface of the second housing 1232. In addition, the upper surface of the first reinforcing member RB1 may correspond to an uppermost surface or uppermost portion of the first groove g1. In addition, the upper surface of the second reinforcing member RB2 may be formed coplanarly with the outer surface of the second housing 1232. The upper surface of the second reinforcing member RB2 may correspond to an uppermost surface or uppermost portion of the second groove g2.

In an embodiment, a maximum length of the reinforcing member may correspond to a maximum depth of the groove. The maximum length of the reinforcing member may be equal to or smaller than the maximum depth of the groove. For example, the maximum length (the length in the second direction) of the first reinforcing member RB1 may be equal to or smaller than the maximum depth (or the length in the second direction) of the first groove g1. In addition, the maximum length (the length in the second direction) of the second reinforcing member RB2 may be equal to or smaller than the maximum depth (or the length in the second direction) of the second groove g2.

When the maximum length of the reinforcing member is equal to the maximum depth of the groove, the board part 1270 may be in contact with the second housing and the reinforcing member.

Furthermore, when the maximum length of the reinforcing member is smaller than or equal to the maximum depth of the groove, the board part 1270 can be easily seated on the side portion of the second housing.

With this configuration, in the embodiment, the board part 1270 disposed on the side portion of the groove and the second housing can have improved reliability.

Further referring to FIGS. 18 to 21, the housing according to the embodiment may include a hole disposed in the side portion for electromagnetic force generation efficiency between the coil and the magnet.

In an embodiment, the first side portion 1232a may include a first hole h1. In addition, the second side portion 1232b may include a second hole h2.

The first hole h1 and the second hole h2 may be positioned inside the first groove g1 and the second groove g2. In addition, the first hole h1 and the second hole h2 may partially overlap each other in the second direction. In addition, the first hole h1 and the second hole h2 may also be misaligned in at least some regions in the second direction corresponding to the first groove g! and the second groove g2. That is, the first hole h1 and the second hole h2 may not at least partially overlap each other in the second direction.

That is, the first hole h1 and the second hole h2 may also have different lengths in the second direction. For example, the length of the second hole h2 may be larger than the length of the first hole h1.

In addition, the first hole h1 and the second hole h2 may have regions partitioned by the first reinforcing member RB1 and the second reinforcing member RB2, respectively.

In an embodiment, the first hole h1 may include a first sub-hole h11 and a second sub-hole h12. In an embodiment, the second hole h2 may include a third sub-hole h21 and a fourth sub-hole h22.

The first sub-hole h11 may be positioned inside the first sub-groove g11. The first sub-hole h11 may have a smaller size than the second sub-groove g1.

In addition, the second sub-hole h12 may be positioned inside the second sub-groove g12. The second sub-hole h12 may have a smaller size than the second sub-groove g12.

With this configuration, the first coil 1251a may face the first magnet through the first hole h1. That is, the first magnet and the first coil 1251a may generate an electromagnetic force without interference through the first hole h1.

In addition, the second coil 1251b may face the second magnet through the second hole h2. Likewise, the second magnet and the second coil 1251b may generate an electromagnetic force without interference through the second hole h2.

Furthermore, a length of the first sub-hole h11 or the second sub-hole h12 in the optical axis direction may differ from a length of the third sub-hole h21 or the fourth sub-hole h22 in the optical axis direction. For example, the first sub-hole h11 or the second sub-hole h12 may be asymmetrical with the third sub-hole h21 or the fourth sub-hole h22 with respect to the optical axis.

In addition, according to the embodiment, the first reinforcing member RB1 may include a first member groove RB1g disposed at the end portion. For example, the first reinforcing member RB1 may include first member grooves RB1g disposed at both sides in the first direction. Accordingly, the first member groove RB1g may have a length L5 in the second direction in the central portion in the first direction (the X-axis direction) that is larger than a length L6 in the second direction at the end portion. That is, the first member groove RB1g may have a thickness that varies in the first direction (the X-axis direction). In addition, the first member groove RB1g may have a greatest thickness in the central portion in the first direction (the X-axis direction). With this configuration, support strength between the first sub-coils or the second sub-coils can be maintained, and a space for electrical connection between the first sub-coil and the second sub-coil can also be easily secured.

The second reinforcing member RB2 may include a second member groove RB2g disposed at the end portion. For example, the second reinforcing member RB2 may include second member grooves RB2g disposed at both sides in the second direction. Accordingly, the second member groove RB2g may have a length L7 in the second direction in the central portion in the second direction (the X-axis direction) that is larger than a length L8 in the second direction at the end portion. That is, the second member groove RB2g may have a thickness that varies in the second direction (the X-axis direction). In addition, the second member groove RB2g may have a greatest thickness in the central portion in the second direction (the X-axis direction). With this configuration, support strength between the third sub-coils or the fourth sub-coils can be maintained, and a space for electrical connection between the third sub-coil and the fourth sub-coil can also be easily secured.

In addition, in the second camera actuator according to the embodiment, the 1-1 stopper ST1a and the 2-1 stopper ST2a may be positioned adjacent to the first side portion 1232a. In addition, the 1-2 stopper ST1b and the 2-2 stopper ST2b may be positioned adjacent to the second side portion 1232b.

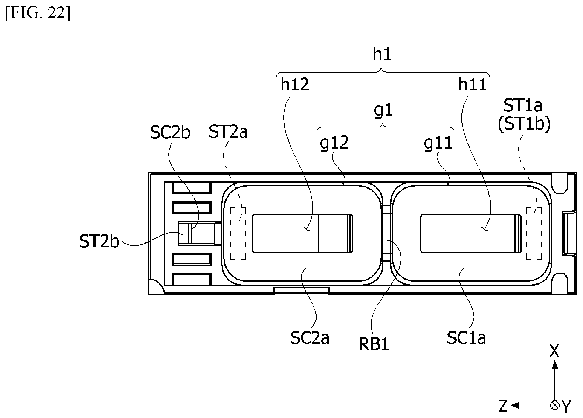

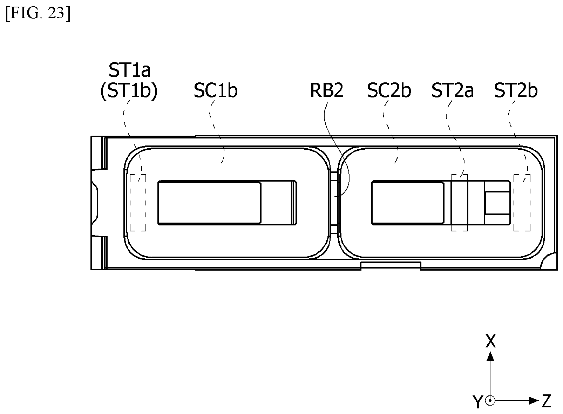

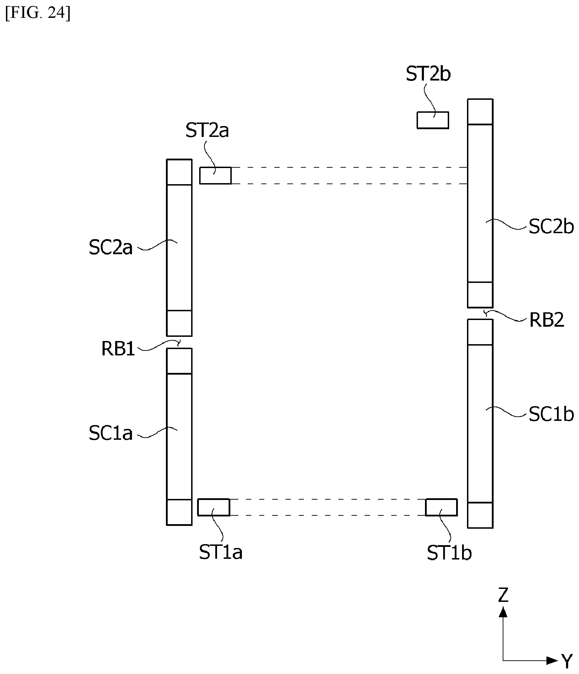

FIG. 22 is a view illustrating the coil and the stopper added to FIG. 16, FIG. 23 is a view illustrating the coil and the stopper added to FIG. 17, and FIG. 24 is a top view of the coil and the stopper of the second camera actuator according to the embodiment.

Referring to FIGS. 22 to 24, the 1-1 stopper ST1a and the 1-2 stopper ST1b in the second camera actuator according to the embodiment may at least partially overlap each other in the second direction (the Y-axis direction).

However, the 2-1 stopper ST2a and the 2-2 stopper ST2b may be misaligned at least partially in the second direction (the Y-axis direction). For example, the 2-1 stopper ST2a and the 2-2 stopper ST2b may not overlap each other in the second direction (the Y-axis direction). With this configuration, as described above, the maximum movement distances of the first lens assembly and the second lens assembly may be different.

In addition, the 1-1 stopper ST1a and the 1-2 stopper ST1b may overlap the first sub-coil SC1a and the third sub-coil SC1b in the second direction (the Y-axis direction). In addition, the 1-1 stopper ST1a and the 1-2 stopper ST1b may at least partially overlap the holes (the coil holes) of the first sub-coil SC1a and the third sub-coil SC1b in the second direction (the Y-axis direction). With this configuration, the electromagnetic force can be applied to the first lens assembly and the second lens assembly with maximum efficiency. That is, it is possible to increase driving efficiency.

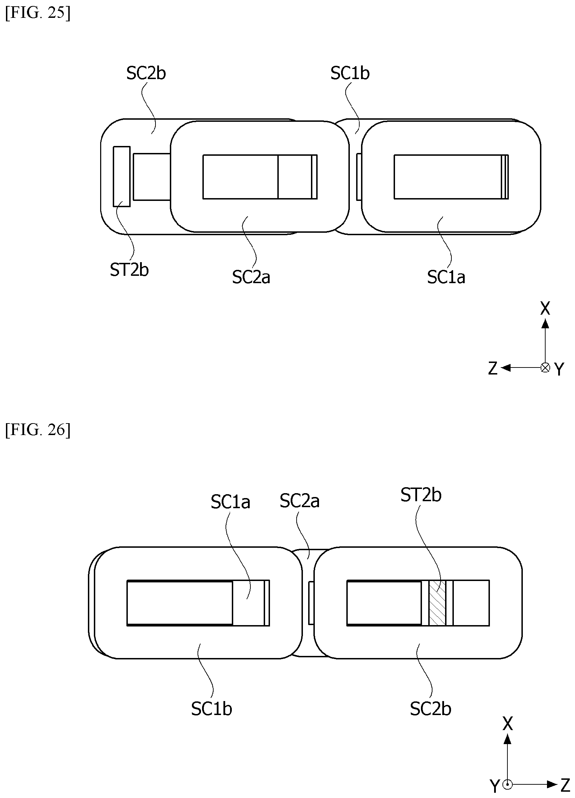

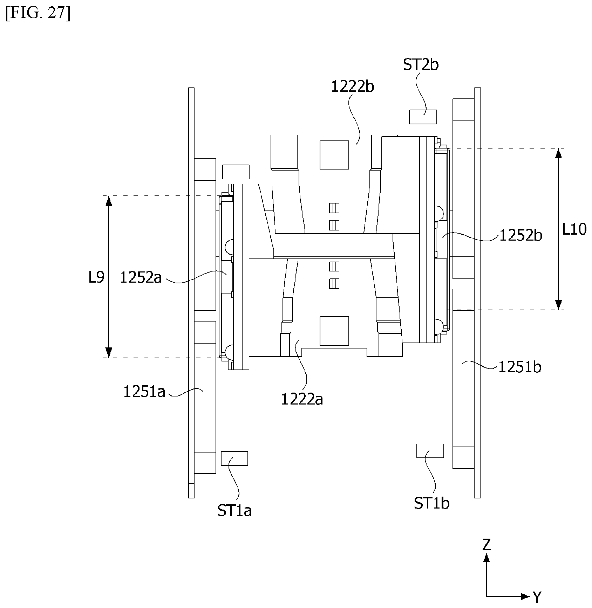

FIG. 25 is a side view of the coil of the second camera actuator according to the embodiment, FIG. 26 is another side view of the coil of the second camera actuator according to the embodiment, and FIG. 27 is a top view of the coil of the second camera actuator according to the embodiment.

Referring to FIGS. 25 to 27, a length L9 of the first magnet 1252a in the optical axis direction may be smaller than a length L10 of the second magnet 1252b in the optical axis direction.

In addition, the length L9 of the first magnet 1252a in the optical axis direction may be larger than the length of the first coil 1251a in the optical axis direction. In addition, the length L10 of the second magnet 1252a in the optical axis direction may be larger than the length of the second coil 1251a in the optical axis direction.

In an embodiment, the length L9 of the first magnet 1252a, the length L10 of the second magnet 1252a, the length of the first coil 1251a, and the length of the second coil 1251b may be sequentially greater.

In addition, the length L9 of the first magnet 1252a in the optical axis direction may be greater than the length of the first sub-groove or the second sub-groove in the optical axis direction. Likewise, the length L10 of the second magnet 1252b in the optical axis direction may be greater than the length of the third sub-groove or the fourth sub-groove in the optical axis direction. Accordingly, the second camera actuator according to the embodiment can suppress the generation of the counter electromotive force, thereby providing increased driving efficiency.

Furthermore, the third sub-coil SC1b may overlap the region between the first sub-coil SC1a and the second sub-coil SC2a in the second direction. That is, the third sub-coil SC1b may overlap the first reinforcing member in the second direction. In addition, the 2-2 stopper ST2b may be spaced apart from the second sub-coil SC2a in the optical axis direction or the third direction (the Z-axis direction) and may be positioned to be misaligned with the second sub-coil SC2a in the second direction. For example, the 2-2 stopper ST2b may be positioned at a rear end of the second sub-coil SC2a. In addition, the 2-2 stopper ST2b may overlap the fourth sub-coil SC2b in the second direction.

Furthermore, the 2-1 stopper ST2a may overlap the fourth sub-coil SC2b in the second direction. In addition, the 2-1 stopper ST2a may overlap the hole of the fourth sub-coil SC2b in the second direction.

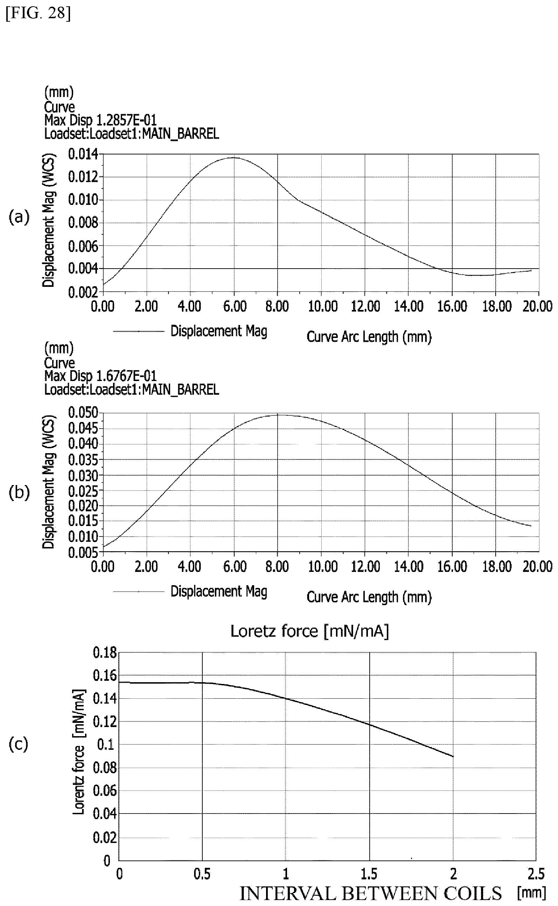

FIG. 28 is a graph for describing an effect of the second camera actuator according to the embodiment.

FIG. 28A is a graph illustrating a displacement size (Displacement Mag (WCS) on a y-axis) for a curve length (Curve Arc Length on an x-axis) of the second camera actuator according to the embodiment, and FIG. 28B illustrates the displacement size for the curve length when the reinforcing member is removed.

As illustrated, (a) the displacement size may be a maximum of 14 µm according to the embodiment, and (b) the displacement size may be a maximum of 50 µm when the reinforcing member is removed. In this way, the camera actuator according to the embodiment can improve the straightness of the groove or hole of the housing and provide increased rigidity.

In addition, FIG. 28C illustrates an electromagnetic force (Lorentz force on a y-axis) according to an interval between coils (on an x-axis). Referring to FIG. 28C, when an interval between adjacent sub-coils increases to more than 1.45 mm, a magnitude of the electromagnetic force can be significantly reduced. Accordingly, a ratio of the interval between the sub-coils and a length of the sub-coils in the optical axis direction may range from 1:10 to 1:20. By such a ratio, it is possible to increase the rigidity while maintaining the electromagnetic force, thereby improving the reliability of the housing.

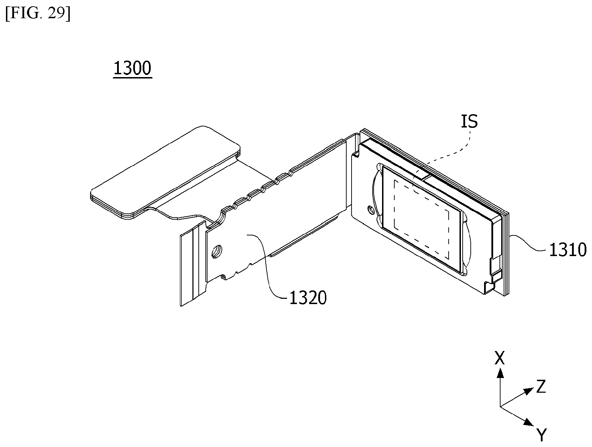

FIG. 29 is a schematic diagram illustrating a circuit board according to an embodiment.

Referring to FIG. 29, as described above, the circuit board 1300 according to the embodiment may include a first circuit board part 1310 and a second circuit board part 1320. The first circuit board part 1310 may be positioned under the base and coupled to the base. In addition, the image sensor IS may be disposed on the first circuit substrate part 1310. In addition, the first circuit board part 1310 and the image sensor IS may be electrically connected. That is, the base may be positioned at the rear end of the second camera actuator, and the image sensor and the circuit board (the first circuit board part) may be positioned at the rear end of the base. The base may include a filter (e.g., infrared rays). The circuit board 1300 may include the above-described image sensor and a sensor base.

In addition, the second circuit board part 1320 may be positioned on a side portion of the base. In particular, the second circuit board part 1320 may be positioned on a first side portion of the base. Therefore, the second circuit board part 1320 may be positioned adjacent to the first coil positioned adjacent to the first side portion for easy electrical connection. In addition, the second circuit board unit 1320 may be positioned on the second side portion of the base. As described above, a plurality of second circuit board parts 1320 may be formed. However, the present disclosure is not limited thereto, and the second circuit board unit 1320 may be disposed on only any one of the first side portion and the second side portion.

Furthermore, the circuit board 1300 may further include a fixed board (not shown) positioned on a side surface thereof. Therefore, even when the circuit board 1300 is made of a flexible material, the circuit board 1300 may be coupled to the base while maintaining stiffness by the fixed board.

The second circuit board part 1320 of the circuit board 1300 may be positioned on the side portion of the driving part 1250. The circuit board 1300 may be electrically connected to the first driving part and the driving part. For example, electrical connection may be made by a surface mounting technology (SMT). However, the present invention is not limited to such a method.

The circuit board 1300 may include a circuit board having wiring patterns that may be electrically connected, such as a rigid printed circuit board (PCB), a flexible PCB, or a rigid-flexible PCB. However, the present invention is not limited to these types.

In addition, the circuit board 1300 may be electrically connected to another camera module in the terminal or a processor of the terminal. Therefore, the above-described camera actuator and camera module including the same may transmit and receive any signal in the terminal.

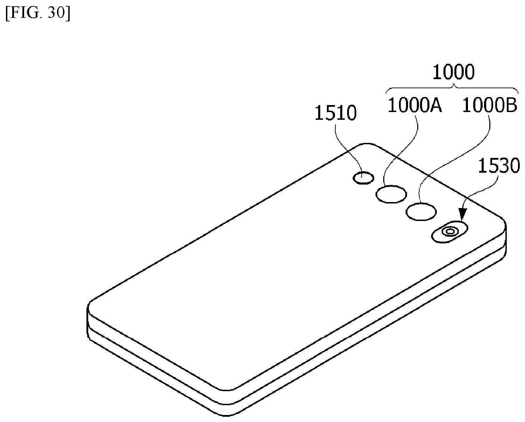

FIG. 30 is a perspective view of a mobile terminal to which the camera module according to the embodiment is applied.

As shown in FIG. 30, a mobile terminal 1500 according to the embodiment may include a camera module 1000, a flash module 1530, and an AF device 1510, which are provided on a rear surface thereof.

The camera module 1000 may include an image capturing function and an AF function. For example, the camera module 1000 may include the AF function using an image.

The camera module 1000 processes an image frame of a still image or a moving image obtained by an image sensor in a capturing mode or a video call mode.

The processed image frame may be displayed on a predetermined display and stored in a memory. A camera (not shown) may also be disposed on a front surface of a body of the mobile terminal.

For example, the camera module 1000 may include a first camera module 1000A and a second camera module 1000B, and the first camera module 1000A may implement an OIS function together with an AF or zooming function.

The flash module 1530 may include a light emitting device for emitting light therein. The flash module 1530 may be operated by a camera operation of the mobile terminal or a user's control.

The AF device 1510 may include one of a package of a surface light emitting laser device as a light emitting unit.

The AF device 1510 may include the AF function using a laser. The AF device 1510 may be mainly used in a condition that the AF function using the image of the camera module 1000 is degraded, for example, a proximity of 10 m or less or dark environment.

The AF device 1510 may include a light emitting unit including a vertical cavity surface emitting laser (VCSEL) semiconductor device and a light receiving unit for converting light energy into electrical energy, such as a photodiode.

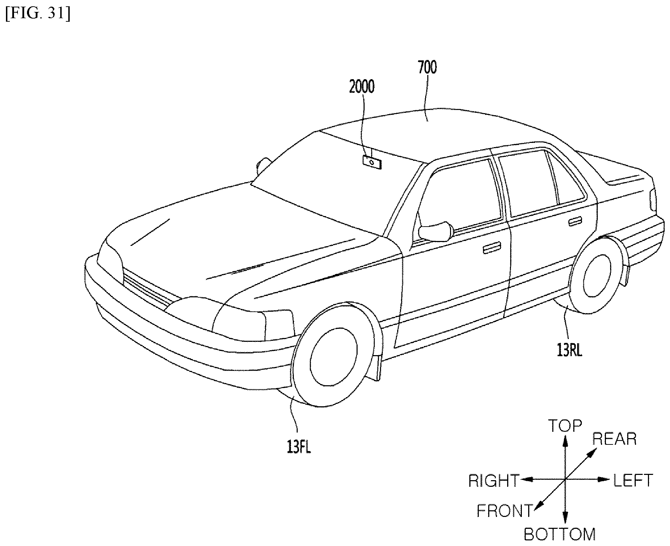

FIG. 31 is a perspective view of a vehicle to which the camera module according to the embodiment is applied.

For example, FIG. 31 is an external view of the vehicle including a vehicle driving assistance device to which the camera module 1000 according to the embodiment is applied.

Referring to FIG. 31, a vehicle 700 according to the embodiment may include wheels 13FL and 13FR rotated by a power source and a predetermined sensor. Although the sensor may be a camera sensor 2000, the present invention is not limited thereto.

The camera sensor 2000 may be a camera sensor to which the camera module 1000 according to the embodiment is applied. The vehicle 700 according to the embodiment may acquire image information through the camera sensor 2000 for capturing a forward image or a surrounding image, determine a situation in which a lane line is not identified using the image information, and generate a virtual lane line when the lane line is not identified.

For example, the camera sensor 2000 may acquire a forward image by capturing a view in front of the vehicle 700, and a processor (not illustrated) may acquire image information by analyzing an object included in the front image.

For example, when a lane line, an adjacent vehicle, a traveling obstacle, and objects, such as a median, a curb, or a tree corresponding to an indirect road mark, are captured in the image captured by the camera sensor 2000, the processor may detect the object and include the detected object in the image information. At this time, the processor may further supplement the image information by acquiring distance information to the object detected through the camera sensor 2000.

The image information may be information on the object captured in the image. The camera sensor 2000 may include an image sensor and an image processing module.

The camera sensor 2000 may process still images or moving images obtained by the image sensor (e.g., a complementary metal-oxide semiconductor (CMOS) or a charge-coupled device (CCD)).

The image processing module may process the still images or moving images acquired through the image sensor to extract necessary information, and transmit the extracted information to the processor.

In this case, although the camera sensor 2000 may include a stereo camera for improving the measurement accuracy of the object and further securing information such as a distance between the vehicle 700 and the object, the present invention is not limited thereto.

Although embodiments have been mainly described above, these are only illustrative and do not limit the present invention, and those skilled in the art to which the present invention pertains can know that various modifications and applications that are not exemplified above are possible without departing from the essential characteristics of the embodiments. For example, each component specifically shown in the embodiments may be implemented by modification. In addition, differences related to these modifications and applications should be construed as being included in the scope of the present disclosure defined in the appended claims.

## Claims

1. A camera actuator comprising:
a housing including a first side portion;
a first lens assembly moving in an optical axis direction in the housing; and
a first driving part that moves the first lens assembly,
wherein the first driving part includes a first magnet disposed on the first lens assembly and a first coil facing the first magnet, and
the first coil includes a first sub-coil and a second sub-coil that are disposed on the first side portion of the housing and sequentially disposed in the optical axis direction, and the housing includes a first reinforcing member disposed between the first sub-coil and the second sub-coil.

2. The camera actuator of claim 1, wherein at least a part of the first reinforcing member overlaps the first coil in the optical axis direction.

3. The camera actuator of claim 1, wherein the first reinforcing member includes a first member groove disposed at an end portion.

4. The camera actuator of claim 1, comprising a second lens assembly moving in the optical axis direction in the housing; and
a second driving part moving the second lens assembly,
wherein the housing includes a second side portion facing the first side portion, and
the second driving part includes a second magnet disposed on the second lens assembly and a second coil facing the second magnet.

5. The camera actuator of claim 1, wherein a length of the first magnet in the optical axis direction is greater than a length of a hole of the first sub-coil in the optical axis direction.

6. The camera actuator of claim 5, wherein a length of the first coil in the optical axis direction is the sum of lengths of the first sub-coil and the second sub-coil in the optical axis direction and a length of the first reinforcing member in the optical axis direction.

7. The camera actuator of claim 1, wherein the first groove includes a first sub-groove in which the first sub-coil is disposed and a second sub-groove in which the second sub-coil is disposed.

8. The camera actuator of claim 7, wherein a length of the first magnet in the optical axis direction is greater than a length of the first sub-groove or the second sub-groove in the optical axis direction.

9. The camera actuator of claim 4, wherein the second coil includes a third sub-coil and a fourth sub-coil that are disposed on the second side portion of the housing and sequentially disposed in the optical axis direction.

10. The camera actuator of claim 9, wherein a length of the second coil in the optical axis direction is greater than a length of the first coil in the optical axis direction.

11. The camera actuator of claim 9, wherein the first coil and the second coil are disposed to be misaligned with each other in a direction perpendicular to the optical axis direction.

12. The camera actuator of claim 9, wherein a length of the first sub-coil or the second sub-coil in the optical axis direction is smaller than a length of the third sub-coil or the fourth sub-coil in the optical axis direction.

13. The camera actuator of claim 9, wherein the housing includes a second groove in which the second coil is disposed and a second reinforcing member disposed between the third sub-coil and the fourth sub-coil.

14. The camera actuator of claim 13, wherein the first reinforcing member and the second reinforcing member are disposed to be misaligned in a direction perpendicular to the optical axis direction.

15. The camera actuator of claim 13, wherein a length of the second groove in the optical axis direction is greater than a length of the first groove in the optical axis direction.

16. The camera actuator of claim 13, wherein the second groove includes a third sub-groove in which the third sub-coil is disposed and a fourth sub-groove in which the fourth sub-coil is disposed.

17. The camera actuator of claim 16, wherein a length of the third sub-groove or the fourth sub-groove in the optical axis direction is greater than a length of the first sub-groove or the second sub-groove in the optical axis direction.

18. The camera actuator of claim 4, comprising:
a 1-1 stopper and a 2-1 stopper disposed to be spaced apart from each other in the optical axis direction and adjacent to the first side portion; and
a 1-2 stopper and a 2-2 stopper disposed to be spaced apart from each other in the optical axis direction and adjacent to the second side portion,
wherein the 1-1 stopper and the 1-2 stopper overlap each other in a direction perpendicular to the optical axis direction, and
the 2-1 stopper and the 2-2 stopper are disposed to be misaligned in the direction perpendicular to the optical axis direction.

19. A camera actuator comprising:
a housing including a first hole and a second hole that are formed in a first side portion and spaced apart from each other;
a first lens assembly moving in an optical axis direction in the housing; and
a first driving part that moves the first lens assembly,
wherein the first driving part includes a first magnet disposed on the first lens assembly and a first coil facing the first magnet, and
the first coil includes a first sub-coil and a second sub-coil that are disposed on the first side portion of the housing and sequentially disposed in the optical axis direction, and
the first sub-coil is disposed in the first hole, and the second sub-coil is disposed in the second hole.

20. A camera actuator comprising:
a housing including a first side portion and a second side portion facing each other;
a first lens assembly and a second lens assembly that move in an optical axis direction in the housing;
a first driving part moving the first lens assembly; and
a second driving part moving the second lens assembly,
wherein the first driving part includes a first magnet disposed on the first lens assembly and a first sub-coil and a second sub-coil facing the first magnet and disposed on the first side portion,
the second driving part includes a second magnet disposed on the second lens assembly and a third sub-coil and a fourth sub-coil facing the second magnet and disposed on the second side portion, and
the housing includes a first reinforcing member disposed between the first sub-coil and the second sub-coil and a second reinforcing member disposed between the third sub-coil and the fourth sub-coil.
